# EUROPEAN PATENT SPECIFICATION

(11) **EP 1 903 763 B1**
(45) Date of publication and mention of the grant of the patent: **11.07.2012**
(21) Application number: 06768206.2
(22) Date of filing: 13.07.2006
(51) Int. Cl.: H04M 3/56, H04N 7/15, H04L 29/06

(54) **Electronic conference system, managing device, terminal device and method for notifying a speaking right condition**
Elektronisches Konferenzsystem, Verwaltungsvorrichtung, Endgerät und Verfahren zur Benachrichtigung eines Sprechrechts
Système de conférence électronique, appareil de gestion, terminal et procédé pour la signalisation d'un droit de parole

(30) Priority: 13.07.2005 JP 2005204733
(43) Date of publication of application: 26.03.2008
(73) Proprietor: Sharp Kabushiki Kaisha, Osaka-shi, Osaka-fu 545-8522 (JP)
(72) Inventor: SHIBATA, Kikuko, Tokyo 134-0088 (JP); TSUCHIYA, Shinichi, Chiba 290-0056 (JP)
(74) Representative: Müller - Hoffmann & Partner
(86) International application number: PCT/JP2006/313998
(87) International publication number: WO 2007/007847

(56) References cited:
- WO-A2-03/036801
- JP-A- 08 298 653
- JP-A- 09 219 850
- JP-A- 11 341 458
- JP-A- 2006 042 362
- US-A1- 2004 196 826
- US-A1- 2005 064 888
- US-A1- 2005 143 135
- "PUSH-TO-TALK OVER CELLULAR (POC) USER PLANE; TRANSPORT PROTOCOLS; POC RELEASE 1.0", TRANSPORT PROTOCOLS V1.1.0, XX, XX, 1 August 2003 (2003-08-01), page COMPLETE, XP000863836,

## Description

### TECHNICAL FIELD

The present invention relates to (i) an electronic conference system for giving a speaking right to a speaking person as in, e.g., a PoC (Push-to-Talk over Cellular) communication group session using mobile phones, (ii) an electronic conference managing device, (iii) a terminal device, (iv) an electronic conference managing method, (v) a control program, and (vi) a computer-readable storage medium storing the control program.

### BACKGROUND ART

In recent years, as an application using voice, Push-to-Talk (PTT) has been drawing attention. The PTT is one way of so-called VoIP (Voice over Internet Protocol), with which a verbal communication is made via a data communication network by using the Internet protocol (IP). Today, as communication means for realizing the PTT in a mobile communication terminal device such as a mobile phone or a PDA, Push-to-Talk over Cellular (PoC) has been developed and implementation thereof in a mobile phone has been discussed.

PoC refers to a technique and a service for realizing, in a communication terminal device such as a mobile phone, "Push-to-Talk" communication similar to that in a transceiver.

PoC communication employs a semi-duplex communication method, by which data transmission can be carried out from the both sides in communication, but the data transmission is always carried out in one direction from one side to the other side at one time. Namely, in the PoC communication, as is the case with the transceiver, voice can be sent to the receiving end only while the sending end keeps on pushing a communication button. While the communication button is being pushed, it is impossible to receive any voice from the receiving end.

Despite such a shortcoming, the PoC communication has an advantage that connection can be attained only in a several seconds by selecting a contact person and pressing a button instead of dialing the contact person's telephone number as is the case with a conventional mobile phone. Another great advantage thereof lies in that the PoC uses the data communication network unlike the conventional call switching method and communication cost is therefore decreased.

Further, the PoC communication makes it possible to carry out not only one-to-one communication but also simultaneous connection (group session) with a plurality of grouped contact persons. Specifically, the PoC communication makes it possible that voice inputted in one mobile phone is transmitted to a plurality of grouped mobile phones at one time.

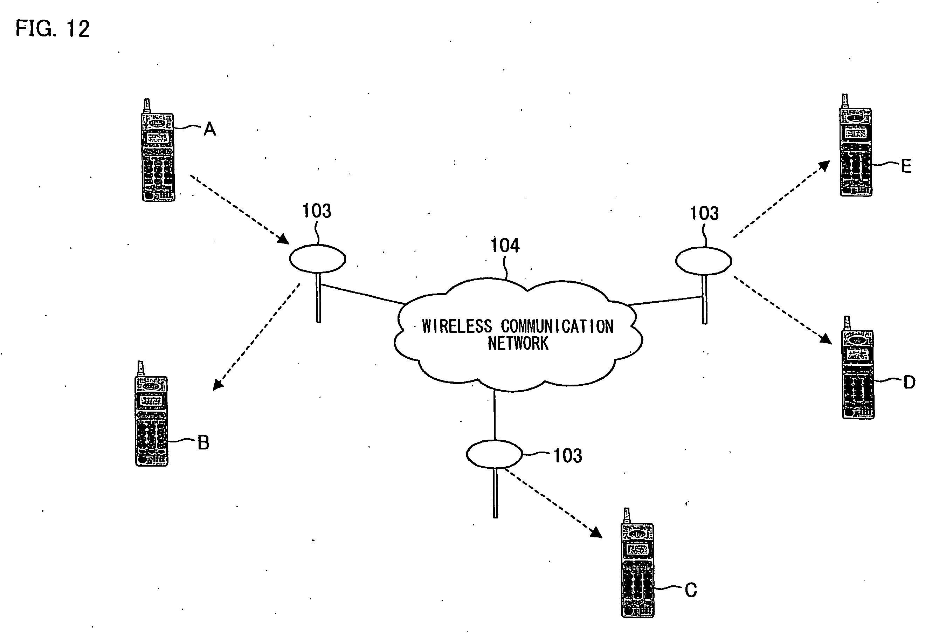

Figure 12 is a diagram illustrating an example of the group session in the PoC communication. Figure 12 illustrates users' mobile phones A to E, each of which uses a mobile phone service provided by a certain communication carrier. The mobile phones A to E can make communication with one another via base stations 103 and a wireless communication network 104, each of which is provided by the communication carrier.

Here, for example, assume that the user of the mobile phone A registers the users of the mobile phones B to E in a group G and thus creates a member list of the group G for the sake of a group session. The user of the mobile phone A selects the group G thus registered, and presses the communication button one time. As a result of the operation, the user of the mobile phone A is allowed to transmit his/her voice to the mobile phones B to E of the users registered in the group G, via the base stations 103 and the wireless communication network 104.

The use of the aforesaid technique allows the speaking person to transmit his/her voice to all the members registered in the group at one time by merely pressing the button one time instead of sending e-mail or making a phone call. For example, such a technique makes it possible to realize a telephone conference among people in charge in an office, with one key operation.

As to background art documents relating to the invention of the present application, there are the following Patent Documents 1 and 2. Patent Document 1 describes a method and a device for reducing waiting time required in waking a group of sleeping communication devices. Patent Document 2 describes a television conference system for managing a speaking right.
[Patent Document 1] Japanese PCT National Phase Unexamined Patent Publication No. 526392/2004 (Tokuhyo 2004-526392; published on August 26, 2004)
(Patent Document 2] Japanese Unexamined Patent Publication Tokukaihei 8-298653 (published on November 12, 1996)

In the technical specification "push-to-talk over cellular (PoC) user plane; transport protocols; PoC release 1.0", transport protocols V1.1.0, 1 August 2003 (2003-08-01). XP-000863836) transport protocols for a user plane of the push-to-talk over celluar system are described. A so-called floor revoke procedure involves a PoC server which notifies a plurality of UEs that no one owns the media resource, i.e. that the floor is actually open and available for users to request. A respective message is conveyed by using the transmit mechanism of UDP.

In US 2005/0064888 Al a temporary block flow allocation method is described. For a push-to-talk function in a mobile communication system, an indication is received by a user that the talking floor is available. Next, an uplink temporary block flow is established. Prior to release of the uplink temporary block flow by the mobile communication system, a refresh message is sent to hold the uplink temporary block flow. Downlink temporary block flows may also be refreshed by this method, or by the mobile communication system. Then the requesting user may enable the push-to-talk function.

From US 2005/0143135 Al a push-to-talk user interface is known which utilizes a single database for all contacts. The all contact database is updated and utilized by the user. A mobile communications device capable of push-to-talk function comprises a speakerphone or ear piece speaker which may provide audio feedback to the user in the form of varying tones depending upon the current action or status of a call. Tones for push-to-talk application may include a floor available tone, or a floor unavailable tone.

In US 2004/0196826 Al an implementation methodology for client initiated parameter negotiation for PTT/VOIP type services is disclosed. A mobile station may include an element for providing perceptible alert signals to the user, which may comprise a tone generator coupled to a speaker. Upon occurrence of various conditions, a beep tone can be output to indicate that the floor is open for a new broadcaster to send.

The above objects are solved by the claimed matter according to the independent claims.

### DISCLOSURE OF INVENTION

### (Problems to be solved by the invention)

As described above, in the group session of the conventional PoC communication, only one person can speak at one time. In order to speak, a speaking right needs to be taken. In other words, data transmitting means is activated only in a terminal having the speaking right. Note that, it is proposed that the speaking right is managed by a server and the conditions of the participants are displayed on the screen of each mobile phone so as to indicate (i) the current holder of the speaking right and (ii) the conditions of the participants.

However, in cases where each user puts his/her mobile phone on the ear while using it, the user bothers to put the mobile phone away from the ear so as to see the screen, every time he/she checks for the speaking right and the other participants.

The present invention is made in light of the foregoing problems, and its object is to realize (i) a multi-location electronic conference system in which a terminal device can output a sound in accordance with a holder of the speaking right, (ii) an electronic conference managing device, (iii) a terminal device, (iv) an electronic conference managing method, (v) a control program, and (vi) a computer-readable storage medium storing the control program.

### (Means for solving the problems)

An electronic conference system according to the present invention includes: a plurality of terminal devices that are able to communicate with one another; and an electronic conference managing device for giving a speaking right to a terminal device, either of each of the terminal devices and the electronic conference managing device including speaking right status presentation control means for causing each of the terminal devices to output, when either of each of the terminal devices and the electronic conference managing device detects a status that the speaking right is given to none of the terminal devices, a speaking right acquisition status presentation sound indicating the status.

According to the above configuration, in cases where either of each terminal device and the electronic conference managing device detects, during an electronic conference, that the speaking right is not given to any of the terminal devices, either of each terminal device and the electronic managing device causes each of the terminal devices to output speaking right acquisition status presentation sound indicating that the speaking right is not given to none of the terminal devices. This allows the participant to confirm that the speaking right can be obtained, while the speaking right is available. Note that the speaking right acquisition status presentation sound data representing the sound to be outputted by each of the terminal devices may be stored in advance in each of the terminal devices or may be acquired from outside as streaming data.

Further, an electronic conference system according to the present invention includes a plurality of terminal devices that are able to communicate with one another, and an electronic conference managing device for giving a speaking right to a terminal device, the electronic conference managing device including speaking right status presentation control means for transmitting to the terminal devices, under a condition that the speaking right is given to none of the terminal devices, an output command of instructing output of a speaking right acquisition status presentation sound indicating the condition.

Further, an electronic conference managing device according to the present invention gives a speaking right to any of a plurality of terminal devices that are able to communicate with one another, and the electronic conference managing device includes: speaking right status presentation control means for transmitting to the terminal devices, under a condition that the speaking right is given to none of the terminal devices, an output command of instructing output of a speaking right acquisition status presentation sound indicating the condition.

An electronic conference managing method according to the present invention is utilized in an electronic conference system including (i) a plurality of terminal devices that are able to communicate with one another and (ii) an electronic conference managing device for giving a speaking right to a terminal device, the electronic conference managing device including speaking right status presentation control means for transmitting to the terminal devices, under a condition that the speaking right is given to none of the terminal devices, an output command of instructing output of a speaking right acquisition status presentation sound indicating the condition.

According to the above configurations and method, in cases where the speaking right has not been given to any of the terminal devices during an electronic conference, the electronic conference managing device transmits, to the terminal devices, the output command of instructing the output of the speaking right acquisition status presentation sound indicating that none of the terminal devices has the speaking right. This makes it possible for each of the terminal devices of the participants to output the speaking right acquisition status presentation sound indicating that the speaking right can be acquired, when the speaking right has not been given to any of the terminal devices. Via the sound, each of the participants confirms that the speaking right can be obtained, while the speaking right is available.

Further, an electronic conference system according to the present invention includes a plurality of terminal devices that are able to communicate with one another, and an electronic conference managing device for giving a speaking right to a terminal device, the electronic conference managing device including speaking right status presentation control means for notifying, under a condition that the speaking right is given to none of the terminal devices, the condition to each of the terminal devices so as to cause each of the terminal devices to output a speaking right acquisition status presentation sound indicating the condition.

Further, an electronic conference managing device according to the present invention gives a speaking right to any of a plurality of terminal devices that are able to communicate with one another, the electronic conference managing device, including: speaking right status presentation control means for notifying, under a condition that the speaking right is given to none of the terminal devices, the condition to each of the terminal devices so as to cause each of the terminal devices to output a speaking right acquisition status presentation sound indicating the condition.

Further, an electronic conference managing method according to the present invention is utilized in an electronic conference system including (i) a plurality of terminal devices that are able to communicate with one another and (ii) an electronic conference managing device for giving a speaking right to a terminal device, the electronic conference managing device including speaking right status presentation control means for notifying, under a condition that the speaking right is given to none of the terminal devices, the condition to each of the terminal devices so as to cause each of the terminal devices to output a speaking right acquisition status presentation sound indicating the condition.

According to the above configurations and method, in cases where the speaking right has not been given to any of the terminal devices during an electronic conference, the electronic conference managing device notifies the terminal devices that none of the terminal devices has the speaking right. This makes it possible for each of the terminal devices of the participants to output the speaking right acquisition status presentation sound indicating that the speaking right can be acquired, when each of the terminal devices receives the notification that the speaking right has not been given to any of the terminal devices. Via the sound, each of the participants confirms that the speaking right can be obtained, while the speaking right is available.

Further, an electronic conference system according to the present invention includes a plurality of terminal devices that are able to communicate with one another, and an electronic conference managing device for giving a speaking right to a terminal device, the electronic conference managing device including speaking right status presentation control means for transmitting, when the electronic conference managing device receives a speaking right obtaining request from any of the terminal devices, to the other terminal devices, either (i) a command of instructing halt of output of a speaking right acquisition status presenting sound indicating that the speaking right is given to none of the terminal devices, or (ii) a command of instructing lowering of a volume of the output of the speaking right acquisition status presentation sound.

Further, an electronic conference managing device according to the present invention gives a speaking right to any of a plurality of terminal devices that are able to communicate with one another, the electronic conference managing device, including: speaking right status presentation control means for transmitting, when the electronic conference managing device receives a speaking right obtaining request from any of the terminal devices, to the other terminal devices, either (i) a command of instructing halt of output of a speaking right acquisition status presenting sound indicating that the speaking right is given to none of the terminal devices, or (ii) a command of instructing lowering of a volume of the output of the speaking right acquisition status presentation sound.

Further, an electronic conference managing method according to the present invention is utilized in an electronic conference system including (i) a plurality of terminal devices that are able to communicate with one another and (ii) an electronic conference managing device for giving a speaking right to a terminal device, the electronic conference managing device including speaking right status presentation control means for transmitting, when the electronic conference managing device receives a speaking right obtaining request from any of the terminal devices, to the other terminal devices, either (i) a command of instructing halt of output of a speaking right acquisition status presenting sound indicating that the speaking right is given to none of the terminal devices, or (ii) a command of instructing lowering of a volume of the output of the speaking right acquisition status presentation sound.

According to the configurations and method, in cases where the electronic conference managing device receives a speaking right obtaining request from any of the terminal devices during an electronic conference, the electronic conference managing device transmits, to the other terminal devices, either (i) the command of instructing halt of the speaking right acquisition status presentation sound indicating that the speaking right is given to none of the terminal devices or (ii) the command of instructing lowering of the volume of the output of the speaking right acquisition status presentation sound. Accordingly, in each of the other terminal devices, the output of the speaking right acquisition status presentation sound is halted or the volume of the output thereof is lowered, so that it is possible to confirm that the speaking right has been given to somebody, while the participant can listen to the speech without being prevented by the sound.

In the case of lowering the volume of the output of the speaking right acquisition status presentation sound, the speaking right acquisition status presentation sound is outputted as BGM. Each of the terminal devices thus halts or lowers the volume of the output of the speaking right acquisition status presentation sound in accordance with the command sent from the electronic conference managing device, and may start the output thereof in accordance with an output command sent from the electronic conference managing device as described later. Alternatively, the output of the speaking right acquisition status presentation sound may be triggered by, e.g., an instruction of the user of the terminal device.

Further, an electronic conference system according to the present invention includes a plurality of terminal devices that are able to communicate with one another, and an electronic conference managing device for giving a speaking right to a terminal device, when any of the terminal devices obtains the speaking right, the electronic conference managing device making a notification, to the terminal devices, that the speaking right has been obtained, when each of the terminal devices receives the notification indicating that the any of the terminal devices has obtained the speaking right, the terminal device halting output of a speaking right acquisition status presentation sound indicating that the speaking right is given to none of the terminal devices, or lowering a volume of the output of the speaking right acquisition status presentation sound.

Further, an electronic conference managing device according to the present invention gives a speaking right to any of a plurality of terminal devices that are able to communicate with one another, the electronic conference managing device, including: speaking right status presentation control means for notifying, when any of the terminal devices obtains the speaking right, the terminal devices that the speaking right has been obtained, so as to halt output of a speaking right acquisition status presentation sound indicating that the speaking right is given to none of the terminal devices, or lower a volume of the output of the speaking right acquisition status presentation sound.

Further, an electronic conference managing method according to the present invention is utilized in an electronic conference system including (i) a plurality of terminal devices that are able to communicate with one another and (ii) an electronic conference managing device for giving a speaking right to a terminal device, the electronic conference managing device including speaking right status presentation control means for notifying, when the electronic conference managing device receives a speaking right obtaining request from any of the terminal devices, the terminal devices that the speaking right has been obtained, so as to halt output of a speaking right acquisition status presentation sound indicating that the speaking right is given to none of the terminal devices, or lower a volume of the output of the speaking right acquisition status presentation sound.

According to the above configurations and method, in cases where the electronic conference managing device receives a speaking right obtaining request from any of the terminal devices, the electronic conference managing device notifies the terminal devices that the speaking right obtaining request has been received. In response to reception of the notification, each of the terminal devices halts the output of the speaking right acquisition status presentation sound indicating that the speaking right is not given to any of the terminal devices, or lowers the volume of the output of the speaking right acquisition status presentation sound. In this way, in each of the other terminal devices, the output of the speaking right acquisition status presentation sound is halted or the volume of the output thereof is lowered, so that it is possible to confirm that the speaking right has been given to somebody, while the participant can listen to the speech without being prevented by the sound.

In the case of lowering the volume of the output of the speaking right acquisition status presentation sound, the speaking right acquisition status presentation sound is outputted as BGM. Each of the terminal devices thus halts or lowers the volume of the output of the speaking right acquisition status presentation sound in accordance with the command sent from the electronic conference managing device, and may start the output thereof in accordance with an output command sent from the electronic conference managing device as described later. Alternatively, the output of the speaking right acquisition status presentation sound may be triggered by, e.g., an instruction of the user of the terminal device.

Further, an electronic conference system according to the present invention includes a plurality of terminal devices that are able to communicate with one another, and an electronic conference managing device for giving a speaking right to each of the terminal devices, the electronic conference managing device, including: speaking right managing means for receiving a speaking right obtaining request from any of the terminal devices, and giving the speaking right to the any of the terminal devices; and speaking right status presentation control means for transmitting, when the speaking right managing means gives the speaking right to the any of the terminal devices, to the other terminal devices, an output command of instructing output of a terminal identification sound correlated with the any of the terminal devices.

Further, an electronic conference managing device according to the present invention gives a speaking right to any of a plurality of terminal devices that are able to communicate with one another, the electronic conference managing device, including: speaking right managing means for receiving a speaking right obtaining request from the any of the terminal devices, and giving the speaking right to the any of the terminal devices; and speaking right status presentation control means for transmitting, when the speaking right managing means gives the speaking right to the any of the terminal devices, to the other terminal devices, an output command of instructing output of a terminal identification sound correlated with the any of the terminal devices.

Further, an electronic conference managing method according to the present invention is utilized in an electronic conference system including (i) a plurality of terminal devices that are able to communicate with one another and (ii) an electronic conference managing device for giving a speaking right to a terminal device, in cases where speaking right managing means of the electronic conference managing device receives a speaking right obtaining request from any of the terminal devices and gives the speaking right to the any of the terminal devices, speaking right status presentation control means of the electronic conference managing device transmits, to the other terminal devices, an output command of instructing output of a terminal identification sound correlated with the any of the terminal devices.

According to the above configurations and method, in cases where the electronic conference managing device receives a speaking right obtaining request from any of the terminal devices during an electronic conference and gives the speaking right thereto, the electronic conference managing device transmits, to the other terminal devices, the output command of instructing the output of the terminal identification sound correlated with the terminal device given the speaking right. This allows the other terminal devices to output the terminal identification sound correlated with the terminal device given the speaking right. Via the sound, each participant confirms who has been given the speaking right.

Further, an electronic conference system according to the present invention includes a plurality of terminal devices that are able to communicate with one another, and an electronic conference managing device for giving a speaking right to a terminal device, the electronic conference managing device, including: speaking right managing means for receiving a speaking right obtaining request from any of the terminal devices, and giving the speaking right to the any of the terminal devices; and speaking right status presentation control means for transmitting, when the speaking right managing means gives the speaking right to the any of the terminal devices, to the other terminal devices, a terminal identifier by which the terminal device having the speaking right is identified, so as to cause each of the other terminal devices to output a terminal identification sound correlated with the terminal device identified by the terminal identifier.

Further, an electronic conference managing device according to the present invention gives a speaking right to any of a plurality of terminal devices that are able to communicate with one another, the electronic conference managing device, including: speaking right managing means for receiving a speaking right obtaining request from the any of the terminal devices, and giving the speaking right to the any of the terminal devices; and speaking right status presentation control means for transmitting, when the speaking right managing means gives the speaking right to the any of the terminal devices, to the other terminal devices, a terminal identifier by which the terminal device having the speaking right is identified, so as to cause each of the other terminal devices to output a terminal identification sound correlated with the terminal device identified by the terminal identifier.

Further, an electronic conference managing method according to the present invention is utilized in an electronic conference system including (i) a plurality of terminal devices that are able to communicate with one another and (ii) an electronic conference managing device for giving a speaking right to a terminal device, in cases where speaking right managing means of the electronic conference managing device receives a speaking right obtaining request from any of the terminal devices and gives the speaking right to the any of the terminal devices, speaking right status presentation control means of the electronic conference managing device transmits a terminal identifier by which the terminal device having the speaking right is identified, so as to cause each of the other terminal devices to output a terminal identification sound correlated with the terminal device identified by the terminal identifier.

According to the above configurations and method, in cases where the electronic conference managing device receives a speaking right obtaining request from any of the terminal devices and gives the speaking right thereto during an electronic conference, the electronic conference managing device transmits, to the other terminal devices, the terminal identifier by which the terminal device given the speaking right is identified. Each of the other terminal devices outputs the terminal identification sound correlated with the received terminal identifier. Via the sound, each participant confirms who has been given the speaking right.

Further, a terminal device according to the present invention constitutes an electronic conference system including (i) a plurality of terminal devices that are able to communicate with one another and (ii) an electronic conference managing device for giving a speaking right to a terminal device, the terminal device, including: speaking right status presenting means for outputting a speaking right acquisition status presentation sound indicating that none of the terminal devices has the speaking right, in cases where the terminal device has not made a speaking right obtaining request for a predetermined period of time since the terminal device released the speaking right or where the electronic conference managing device does not notify the terminal device that the speaking right has been given to none of the terminal devices.

According to the above configuration, in cases where each terminal device has not made a speaking right obtaining request for the predetermined period of time since the terminal device released the speaking right or where the electronic conference managing device does not notify the terminal device that the speaking right has been given to other terminal device, the terminal device judges that the speaking right is given to none of the terminal devices, and outputs the speaking right acquisition status presentation sound indicating that the speaking right is given to none of the terminal devices. Via the sound, each participant confirms that it is possible to make a request for the speaking right.

A terminal device according to the present invention constitutes an electronic conference system including (i) a plurality of terminal devices that are able to communicate with one another and (ii) an electronic conference managing device for giving a speaking right to a terminal device, the terminal device, including: speaking right status presenting means for starting outputting a speaking right acquisition status presentation sound indicating that none of the terminal devices has the speaking right, in cases where the terminal device has not made a speaking right obtaining request for a predetermined period of time since the terminal device received last communication from the other terminal devices or where the electronic conference managing device does not notify the terminal device that the speaking right has not been given to none of the terminal devices.

According to the above configuration, in cases where each terminal device has not made a speaking right obtaining request for the predetermined period of time since the terminal device received the last communication from other terminal device or where the electronic conference managing device does not notify the terminal device that the speaking right has been given to other terminal device, the terminal device judges that the speaking right is given to none of the terminal devices, and outputs the speaking right acquisition status presentation sound indicating that the speaking right is given to none of the terminal devices. Via the sound, each participant confirms that it is possible to make a request for the speaking right.

A terminal device according to the present invention constitutes an electronic conference system including (i) a plurality of terminal devices that are able to communicate with one another and (ii) an electronic conference managing device for giving a speaking right to a terminal device, the terminal device, including: speaking right information acquiring means for receiving, from the electronic conference managing device, speaking right information indicating a terminal device having the speaking right; and speaking right status presenting means for reading out, from a storage section, terminal identification sound data correlated with the terminal device having the speaking right, and reproducing the terminal identification sound data thus read out.

According to the above configuration, the terminal device reads out, from the storage section, the terminal identification sound data correlated with the terminal device having the speaking right and reproduces it. When the participant listens to the terminal identification sound data, he/she confirms who has the speaking right. Further, the electronic conference managing device merely transmits thereto the speaking right information indicating the terminal device given the speaking right, so that the configuration of the electronic conference managing device is simple.

As described above, according to the present invention, during an electronic conference, a participant's terminal device outputs a sound according to a holder of the speaking right. Hence, even when the participant puts the terminal device on the ear, he/she recognizes the status of the speaking right. A specific example of the terminal device is a mobile phone or the like.

Note that each of the aforesaid electronic conference managing device and the terminal device may be realized by a computer. In this case, the present invention encompasses (i) respective control programs for the electronic conference managing device and the terminal device, which control programs realize the electronic conference managing device and the terminal device in a computer, and (ii) computer-readable storage media respectively storing the control programs.

### BRIEF DESCRIPTION OF DRAWINGS

Figure 1 is a function block diagram schematically illustrating the configuration of a PoC communication system according to an embodiment of the present invention.
Figure 2 is an explanatory diagram schematically illustrating the configuration of a network of the PoC communication system shown in Figure 1.
Figure 3 is a block diagram schematically illustrating the hardware configuration of a mobile phone constituting the PoC communication system shown in Figure 1.
Figure 4 is a sequence diagram illustrating one example of operations of the PoC communication system shown in Figure 1.
Figure 5 is a sequence diagram illustrating another example of operations of the PoC communication system shown in Figure 1.
Figure 6 is a flowchart illustrating one example of operations of the mobile phone constituting the PoC communication system shown in Figure 1.
Figure 7 is a sequence diagram illustrating still another example of operations of the PoC communication system shown in Figure 1.
Figure 8 is a sequence diagram illustrating yet another example of operations of the PoC communication system shown in Figure 1.
Figure 9 is a sequence diagram illustrating still another example of operations of the PoC communication system shown in Figure 1.
Figure 10 is a sequence diagram illustrating yet another example of operations of the PoC communication system shown in Figure 1.
Figure 11 is a sequence diagram illustrating still another example of operations of the PoC communication system shown in Figure 1.
Figure 12 is an explanatory diagram illustrating one example of a group session using a conventional PoC communication.

### REFERENCE NUMERALS

10. PoC server (electronic conference managing device)
11. speaking right managing section (speaking right managing means)
12. speaking right status presentation control section (speaking right status presentation control means)
13. storage section
15. speech detecting section (speech detecting means)
16. voice recognizing section (voice recognizing means)
17. presentation data creating section (presentation data creating means)
40. mobile phone (terminal device)
50. storage section
61. speaking right obtaining/releasing section (speaking right obtaining/releasing means)
62. speaking right information acquiring section (speaking right information acquiring means)
63. speaking right status presenting section (speaking right status presenting means)
100. PoC communication system(electronic conference system)

### BEST MODE FOR CARRYING OUT THE INVENTION

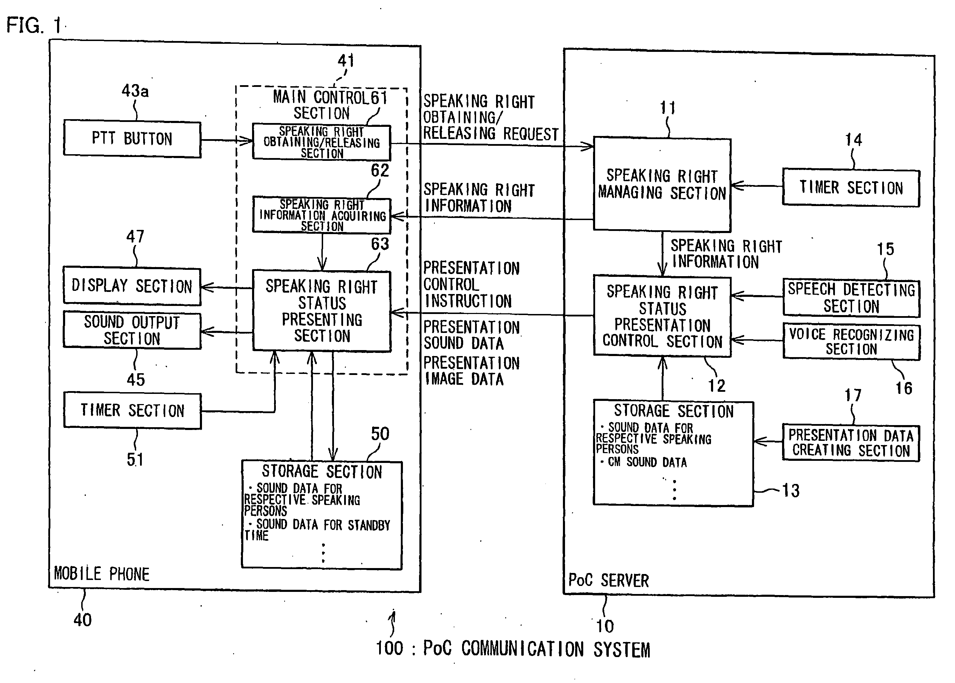

One embodiment of the present invention will be described below with reference to Figure 1 to Figure 11.

In the present embodiment, a mobile phone is exemplified as a terminal device of the present invention, and a PoC server is exemplified as a server device thereof. However, the present invention is not limited to such a PoC communication system, but is widely applicable to an electronic conference system in which a participant obtains a speaking right so as to speak. Further, as described above, the phrase "give the speaking right to a terminal device" indicates that only a terminal device given the speaking right is allowed to carry out data transmission.

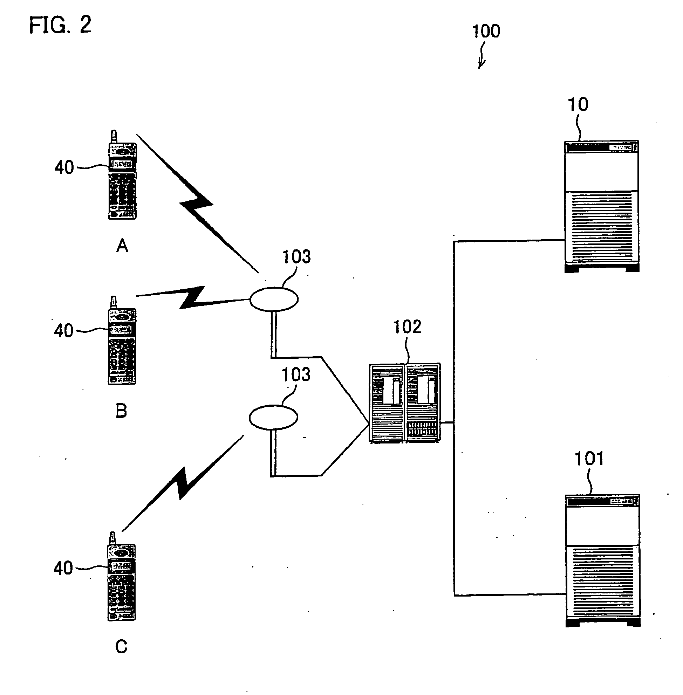

Figure 2 is a diagram schematically illustrating the configuration of the PoC communication system according to the present embodiment.

As shown in Figure 2, the PoC communication system 100 at least includes (i) mobile phones 40 operated by users who participate in an electronic conference, and (ii) a PoC server 10. The mobile phones 40 are connected to the PoC server10 via a mobile phone network provided by a communication carrier running a mobile phone service, and can communicate with one another. For the mobile phone network, Figure 2 merely illustrates base stations 103 and a base station control device 102 carrying out general control over the base stations 103.

That is, the PoC communication system 100 is made up of (i) a mobile phone 40 (e.g., mobile phone A) transmitting information by using the PoC communication, (ii) mobile phones 40 (e.g., mobile phones B and C) receiving the transmitted information, and (iii) the PoC server 10 controlling the PoC communication among the mobile phones A to C.

The PoC communication system 100 may further include a presence server 101 for managing presence of each of the mobile phones A to C. The presence server 101 uniformly manages the presences of all the mobile phones, which are managed in a central manner by the PoC server 10. Here, the "presences of the mobile phones" refers to information indicating utilization conditions of the mobile phone, conditions thereof, and the like. Specific examples thereof are (i) application utilization conditions, such as "online", "offline", "participate as (conference) observer", and "participating (in conference)"; and (ii) conditions of the mobile phones such as "powered ON/OFF", "busy", "speakerphone active (in operation)", and the like.

The following explains components of each mobile phone 40 and the PoC server 10 in the PoC communication system 100.

In the PoC communication system 100, the PoC server 10 provides various functions for speaking in a 1-to-1 or 1-to-plural session established by the mobile phones A to C with the use of the PoC communication.

The functions of the PoC server 10 can be classified into (i) PoC control functions for carrying out central control over the session established by the mobile phones and (ii) PoC participation functions for relaying the PoC server, which carries out the central control, to each of the mobile phones, which are respectively handled by participants of the session. Main functions of the PoC server 10 are as follows.

For example, the main functions thereof are (i) a function for establishing a session in the PoC communication, (ii) a function for controlling speeches such as recognition of a speaker, (iii) a function for controlling start (end) of an SIP (Session Initiation Protocol) session, (iv) a function for providing information to the participants of the session, and the like. These functions realize either a 1-to-1 speaking using the PoC or such a group session as described above.

In the meanwhile, each of the mobile phones A to C is a communication terminal device having a function for making a speech via the Push-to-Talk (PTT). The user uses the mobile phone in such a manner that he/she uses a transceiver. That is, the user presses a PTT button to speak. Alternatively, an operation may be carried out in the same way as the operation carried out when the PTT button is pressed down, in cases where it is found, as a result of voice recognition, that a voice inputted to the mobile phone coincides with a voice registered in advance.

Each of the mobile phones A to C can communicate with the PoC server 10 and the presence server 101 via the mobile phone network provided by the communication carrier, i.e., via the base stations 103 and the base station control device 102 carrying out general control over the base stations 103. This allows the users of the mobile phones A through C to make PoC communication with one another via their mobile phones.

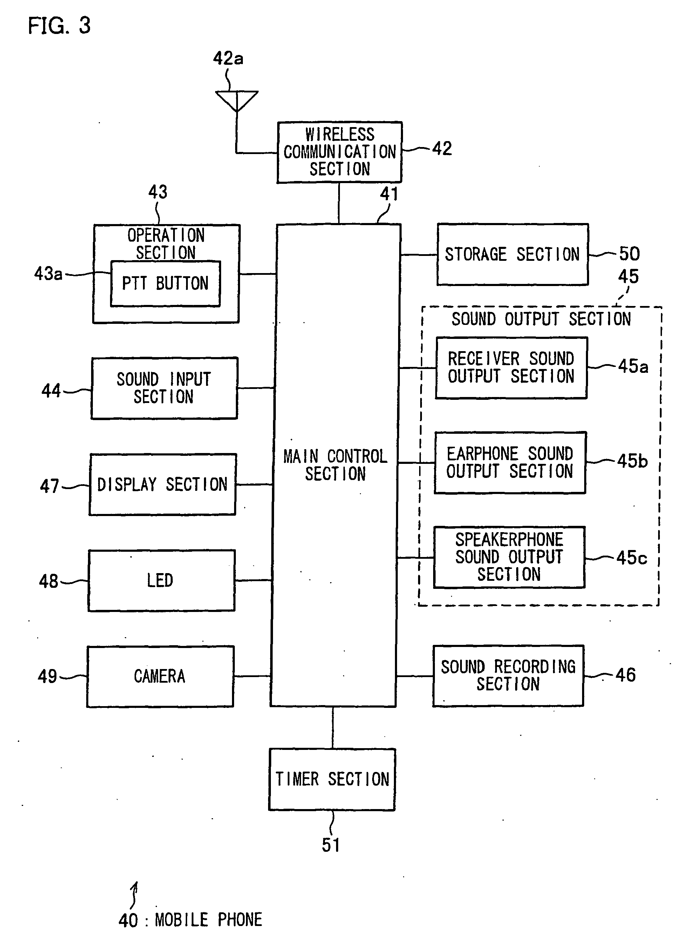

Figure 3 is a diagram schematically illustrating the configuration of each of the mobile phones A to C (hereinafter, simply referred to as "mobile phone") in the PoC communication system 100 of the present invention.

As shown in Figure 3, the mobile phone 40 according to the present embodiment includes a wireless communication section 42, a wireless communication antenna 42a, an operation section 43, a sound input section 44, a sound output section 45, a sound recording section 46, a display section 47, an LED (Light Emitting Diode) 48, a camera 49, a storage section 50, a timer section 51, and a main control section 41 for carrying out general control over these sections.

The wireless communication section 42 is a communication interface for carrying out wireless communication with the base stations 103 of the mobile phone network via the wireless communication antenna 42a.

The operation section 43 is constituted by buttons and dials operated by the user. The operation section 43 includes a PTT button 43a pressed down by the user to speak in the PoC communication. Signals generated by the operation section 43 upon operating the PTT button 43a and the like are sent to the main control section 41.

The sound input section 44 is a microphone, and is used for input of data to be transmitted as a result of executing the telephone function, or as a result of executing the PoC communication function. A sound produced outside the mobile phone is caught into the mobile phone via the sound input section 44 as sound data. Further, for transmitting a voice to the other mobile phones by using the PoC communication, the user's voice caught via the sound input section 44 is transmitted to the PoC server 10 as transmission information. In the present embodiment, the sound information, which is inputted via the sound input section 44 when the user presses down the PTT button 43a and is to be transmitted thereto by using the PoC communication, is referred to as "speech data".

The sound output section 45 is a speaker or the like for outputting a voice, and is used for various functions including the PoC communication. The sound output section 45 includes a receiver sound output section 45a, an earphone sound output section 45b, and a speakerphone sound output section 45c.

The receiver sound output section 45a is a speaker for outputting a sound toward an ear on which the mobile phone is put, in the same manner as in a receiver of a normal telephone.

The earphone sound output section 45b includes a sound outputting terminal, to which an earphone is to be connected. When an earphone is connected to the terminal, a sound is outputted to the earphone. With this, the sound is outputted from a small speaker of the earphone put on the user's ear, so that the user can hear the output sound of the mobile phone without keeping on putting the mobile phone on the ear and leaking the sound to outside.

The speakerphone sound output section 45c is a speakerphone, i.e., is a speaker for outputting a sound from the mobile phone with such a volume that the sound can be heard sufficiently in surroundings of the mobile phone. The use of such a speakerphone allows the user to hear the output sound with a sufficient volume from the mobile phone positioned away from the ear so as to, e.g., speak while viewing an image displayed on the display section 47 or so as to hear voices of a plurality of users with the use of one mobile phone.

The sound recording section 46 records, as sound data onto the storage section 50, a sound received from outside via the wireless communication section 42 or the sound input section 44. With this, even in cases where an input sound is not outputted in realtime from the sound output section 45, the user can hear afterward the data of sound recorded by the sound recording section 46.

The display section 47 is constituted by, e.g., a liquid crystal display device (LCD) and displays a screen image corresponding to execution of each of various functions of applications provided in the mobile phone. For example, while the PoC communication function is being executed, the display section 47 displays (i) the group name of a session in which the mobile phone is currently participating, (ii) the names of participants in the session, (iii) the respective presences of the participants (i.e., the status of each mobile phone such as "online", "offline", "with speaking right", or "without speaking right"), and the like.

The LED 48 is used as means for making a visual notification to the user of the mobile phone. For example, while receiving an incoming call, the LED 48 may blink.

The camera section 49 is image capturing means constituted by a CCD (Charge Coupled Device) and the like, and is configured to capture an image of a subject in accordance with control from the main control section 41.

The timer section 51 is a timer, and is used to count time for, e.g., time limit set on the speaking right as described later.

Further, provided inside the main control section 41 of the mobile phone are executing sections for executing various applications including the PoC communication. The executing sections for the functions will be explained in detail later.

The storage section 50 is a memory, a hard disk, or the like for storing programs and data each necessary for executing the various functions of the applications provided in the mobile phone. For example, the storage section 50 stores the member list of a group session, sound data (inclusive of speaking right acquisition status presentation sound data, terminal identification sound data) recorded by the sound recording section 46, and the like. Apart from these, the storage section 50 stores an application program for transmitting and receiving e-mail by using the mobile phone. These programs and data are read out by the main control section 41 as required.

Note that the mobile phone is capable of using various applications through wireless communication, such as a telephone, e-mail, and the Internet, apart from the PoC communication function. Hence, the aforesaid sections and functions of the mobile phone are not limited to these, and the mobile phone may have various other functions. For example, the mobile phone may include sections such as a GPS (Global Positioning System) for detecting a current location, and a TV antenna and a tuner each for realizing a TV broadcasting receiving function.

Figure 1 is a function block diagram illustrating details of the configuration regarding a speaking right notifying function in the PoC communication system 100 according to the present embodiment. The following exemplifies a case where the speaking right notifying function, which is the feature of the present invention, is applied to the PoC communication system. However, the present invention is not limited to this. Further, the following explains a case where the mobile phone 40 outputs sound data (speaking right acquisition status presentation sound data, terminal identification sound data) according to a status of the speaking right; however, the sound data may be presented together with image data, or only the image data may be presented.

The PoC communication system 100, which serves as an electronic conference managing device, includes (i) the plurality of mobile phones (terminal devices) 40 that can communicate with one another, and (ii) the PoC server (electronic conference managing device) 10 that gives the speaking right to a mobile phone 40. The PoC server 10 can be configured based on a general-purpose computer, such as a workstation, having a communication function with a wireless communication network.

As shown in Figure 1, each of the mobile phones 40 includes a speaking right obtaining/releasing section 61, a speaking right information acquiring section 62, and a speaking right status presenting section 63. Note that the speaking right obtaining/releasing section 61, the speaking right information acquiring section 62, and the speaking right status presenting section 63 are realized by the main control section 41.

The speaking right obtaining/ releasing section 61 transmits a speaking right obtaining request or a speaking right releasing request to the PoC server 10 in accordance with a signal from the PTT button 43a operated by the user.

The speaking right information acquiring section 62 receives, from the speaking right managing section 11 of the PoC server 10, speaking right information indicating a mobile phone 40 having the speaking right. The speaking right information is information indicating the holder of the speaking right, and specific examples thereof are (i) the ID of a participant who has the speaking right, (ii) information indicating that no participants has the speaking right, and the like.

Further, when obtaining the speaking right, the speaking right information acquiring section 62 of the mobile phone 40 acquires, as the speaking right information, information indicating that the mobile phone 40 has the speaking right and replying to the speaking right obtaining request transmitted by the speaking right obtaining/ releasing section 61 so as to obtain the speaking right. That is, the mobile phone 40 is notified by the speaking right information that the speaking right has been allocated to the mobile phone 40. Note that, it is possible to notify, by using information different from the speaking right information, that the speaking right has been allocated to the mobile phone 40. Of course, the speaking right information is used for functions other than the speaking right notifying function of the applications for the electronic conference.

Depending on the holder of the speaking right, the speaking right status presenting section 63 causes the sound output section 45 to output a sound and causes the display section 47 to display an image. The speaking right status presenting section 63 is capable of presenting the sound or the image by (1) using, in accordance with a command received from the PoC server 10, data received from the PoC server 10; (2) using, in accordance with a command received from the PoC server 10, data stored in the storage section 50 of the mobile phone 40; and (3) using, in accordance with a judgment made by the mobile phone 40, data stored in the storage section 50 of the mobile phone 40.

Specifically, the speaking right status presenting section 63 has a function of reading out, from the storage section 50, the sound data (terminal identification sound data) correlated with the mobile phone 40 having the speaking right and of reproducing it. Further, the speaking right status presenting section 63 has a function of reproducing sound data (speaking right acquisition status presentation sound data) indicating that none of the mobile phones 40 is given the speaking right, in cases where the mobile phone 40 does not make a speaking right obtaining request after passage of a predetermined time from the release of the speaking right or where the speaking right managing section 11 1 of the PoC server 10 does not notify that other mobile phone 40 is given the speaking right. Furthermore, the speaking right status presenting section 63 has a function of starting to reproduce a sound indicating that the speaking right is not given to any of the mobile phones 40, in cases where the mobile phone 40 has not made a speaking right obtaining request since passage of a predetermined time from the last communication with the other mobile phones 40 or where the speaking right managing section 11 of the PoC server 10 does not notify that other mobile phone 40 has the speaking right.

Note that the speaking right status presenting section 63 may carry out control such that presentation data is presented according to a status of the speaking right, as is the case with the below-described speaking right status presentation control section 12 of the PoC server 10. In contrast, as is the case with the speaking right status presenting section 63 of the mobile phone 40, the speaking right status presentation control section 12 of the PoC server 10 may provide the mobile phone 40 with an audio signal obtained by reproducing the sound data, and the sound output section 45 of the mobile phone 40 may carry out sound output.

Further, the storage section 50 stores (i) terminal identification sound/image data associated with a participant of the electronic conference (or associated with a mobile phone operated by the participant); (ii) speaking right acquisition status presentation sound/image data presented when none of the participants is given the speaking right, i.e., presented during standby time; and the like. These data may be stored therein in advance, or may be acquired from the PoC server 10 or other devices as required. Further, the data once stored in the storage section 50 may be able to be referred in the offline manner after the electronic conference, or may be used in a next or later electronic conference.

Further, the PoC server 10 includes the speaking right managing section 11, the speaking right status presentation control section 12, the storage section 13, the timer section 14, a speech detecting section 15, a voice recognizing section 16, and a presentation data creating section 17.

The speaking right managing section 11 receives a speaking right obtaining request from any of the mobile phones 40 and gives the speaking right to the mobile phone 40. Further, the speaking right managing section 11 receives a speaking right releasing request from the mobile phone 40 having the speaking right, and releases the speaking right therefrom. Further, the speaking right managing sections 11 sequentially gives below-described speaking priority rights to the mobile phones 40. Further, the speaking right and the speaking priority rights each given by the speaking right managing section 11 may be set with a time limit until which it is possible to speak. Further, in cases where the speaking right managing section 11 does not receive a speaking right obtaining request from any of the mobile phones 40 for a predetermined time, the speaking right managing section 11 gives the speaking right to the PoC server 10 for the purpose of reproducing sound data (speaking right acquisition status presentation sound data) indicating that none of the mobile phones 40 has the speaking right. In this case, when a mobile phone 40 makes a speaking right obtaining request, the speaking right managing section 11 gives the speaking right thereto in favor of the speaking right obtaining request from the mobile phone 40.

It is desirable that after passage of a certain period of time during which none of the mobile phones 40 has the speaking right, each mobile phone 40 reproduces music data so as to indicate that the speaking right can be acquired. A reason thereof is as follows. That is, there is inevitably a blank state when the speaking right is changed from one to another, so that if the music data is reproduced immediately after the change of the speaking right, sound data of several seconds are inserted in an interrupted manner. However, by reproducing the sound data after passage of a certain period of time upon the change of the speaking right, the sound data of several seconds are never inserted in such a manner.

The speaking right status presentation control section 12 controls each of the mobile phones 40 such that the speaking right status presenting section 63 thereof presents presentation data according to a status of the speaking right.

Specifically, when the speaking right is given to none of the mobile phones 40, the speaking right status presentation control section 12 transmits to each mobile phone 40 a reproduction command (output command) for instructing the mobile phone 40 to reproduce the sound data (speaking right acquisition status presentation sound data) indicating that none of the mobile phones 40 has the speaking right. Further, when the speaking right status presentation control section 12 receives a speaking right obtaining request from a mobile phone 40, the speaking right status presentation control section 12 transmits to the other mobile phones 40 (i) a command for instructing halt of reproduction of the sound data (speaking right acquisition status presentation sound data), or (ii) a command for instructing lowering of a volume of the sound data (speaking right acquisition status presentation sound data) currently reproduced.

Explained in the present embodiment is a case where the sound (speaking right acquisition status presentation sound, terminal identification sound) is outputted when the mobile phone 40 reproduces either (i) sound data received from the PoC server 10 together with the reproduction command and stored in the storage section 50 or (ii) sound data stored in advance therein. However, the present invention is not limited to this. The mobile phone 40 may receive, from the PoC server 10 or other external device, an audio signal obtained by reproducing the data, and output it as it is so as to output the sound.

Further, when the speaking right managing section 11 gives the speaking right to a mobile phone 40, the speaking right status presentation control section 12 transmits, to the other mobile phones 40, a reproduction command for instructing reproduction of sound data (terminal identification sound data) associated with the mobile phone thus given the speaking right.

Further, when the speech detecting section 15 detects a speech, the speaking right status presentation control section 12 transmits, to the other mobile phones 40, (i) a command for instructing halt of the reproduction of the sound data (speaking right acquisition status presentation sound data, terminal identification sound data) currently reproduced, or (ii) a command for instructing lowering of a volume of the reproduction of the sound data.

Further, when transmitting, to the mobile phones 40, a reproduction command for instructing reproduction of the sound data (speaking right acquisition status presentation sound data, terminal identification sound data), the speaking right status presentation control section 12 reads out the sound data from the storage section 13 and transmits it to each of the mobile phones 40. Further, the speaking right status presentation control section 12 selects, in accordance with a recognition of the voice recognizing section 16, sound data that the mobile phone 40 is instructed to reproduce. Note that the sound data may represent a CM (commercial).

Further, the storage section 13 stores (i) terminal identification sound/image data respectively associated with the participants of the electronic conference (or mobile phones operated by the participants), (ii) speaking right acquisition status presentation sound/image data presented when the speaking right has been given to none of them (during waiting time), (iii) CM sound/image data, and the like.

The timer section 14 is a timer and is used to count time for a time limit, etc., set for the speaking right or each of the speaking priority rights.

The speech detecting section 15 detects a speech in speech data received from the mobile terminal 40 having the speaking right. When the speech detecting section 15 detects the speech, the speaking right status presentation control section 12 transmits a command to the mobile phones so as to halt reproduction of sound data such as music.

The voice recognizing section 16 recognizes the content of the speech from the speech data received from the mobile phone 40 having the speaking right. For example, the voice recognizing section 16 carries out voice recognition in accordance with the speech data received from the mobile phone, specifies the content of the speech, and selects CM data suitable to the content thereof.

The presentation data creating section 17 creates presentation data to be presented by each of the mobile phones of the participants. For example, the presentation data creating section 17 creates presentation music data by (i) processing music data, provided by a participant, such that the reproduction of the music data is finished in a time (time limit) during which the participant is allowed to speak with the speaking right, or (ii) processing music data such that speed of the reproduction of the music data becomes faster (or slower) as time comes closer to the time limit. The presentation data thus created by the presentation data creating section 17 is stored in the storage section 13 so as to be correlated with information indicating a mobile phone that the presentation data should be presented when the mobile phone has the speaking right. The presentation data may be transmitted to the mobile phones before the conference such that it is stored in each of the mobile phones in advance, or may be transmitted thereto together with the reproduction command when the presentation data should be reproduced.

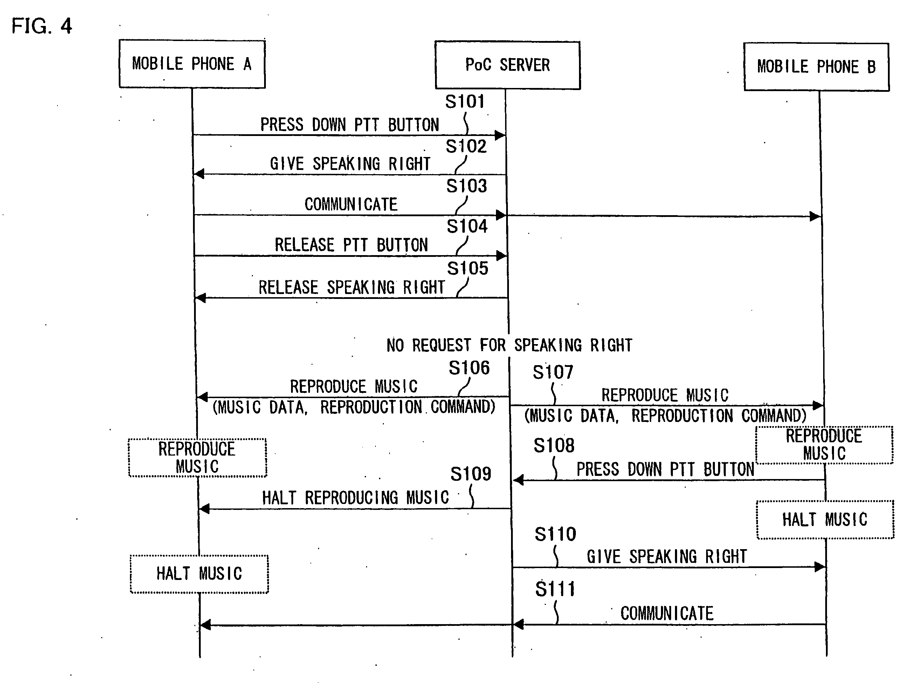

With reference to Figure 4 to Figure 11, the following concretely explains the sequence of a speaking right notifying function in the PoC communication system 100. In the explanation herein, it is assumed that sound outputted for notification is music; however, the present invention is not limited to this.

[1] Transmit music data and reproduction command from the PoC server to each mobile phone when none of the mobile phones has the speaking right.
Figure 4 is a sequence diagram illustrating one example of an operation of the PoC communication system 100.

First, as shown in Figure 4, the PTT button 43a is pressed down in the mobile phone A, with the result that the speaking right obtaining/releasing section 61 transmits a speaking right obtaining request to the PoC server 10 (S101) .

The speaking right managing section 11 of the PoC server 10 receives the speaking right obtaining request, determines that the speaking right is going to be given to the mobile phone A, and transmits, to the mobile phone A, speaking right information indicating that the holder of the speaking right is the mobile phone A (S102).

Next, the mobile phone A detects, in accordance with the speaking right information received by the speaking right information acquiring section 62, that the speaking right has been given thereto, notifies the user that the speaking right has been given, and transmits the user's speech to the PoC server 10. The speech is broadcasted to other mobile phones B via the PoC server 10 (S103). The notification that the speaking right has been given to the mobile phone A is made to the user by the display section 47, the LED 48, and the sound output section 45.

Next, when the PTT button 43a stops being pressed down in the mobile phone A, the speaking right obtaining/releasing section 61 transmits a speaking right releasing request to the PoC server 10 (S104).

The speaking right managing section 11 of the PoC server 10 receives the speaking right releasing request, determines that the speaking right is released from the mobile phone A, and transmits, to the mobile phone A, speaking right information indicating that the speaking right has been released from the mobile phone A (S105). Note that the speaking right information thus transmitted may indicate that none of the mobile phones has the speaking right.

When no mobile phone thereafter makes a request to the PoC server 10 for the speaking right, the speaking right status presentation control section 12 transmits, to all the mobile phones, (i) music data indicating that none of the mobile phones has the speaking right and (ii) a reproduction command (presentation control instruction) for instructing reproduction of the music data (S106, S107). Note that the music data is stored in the storage section 13 in advance. Then, in each mobile phone, the speaking right status presenting section 63 causes the sound output section 45 to output the received music data. Further, the PoC server 10 may be configured to wait for a predetermined time measured by the timer section 14, before confirming that no mobile phone makes a request for the speaking right.

Assume that the PTT button 43a of a mobile phone B is pressed down thereafter. In response, the speaking right obtaining/releasing section 61 of the mobile phone B transmits a speaking right obtaining request to the PoC server 10 (S108). On this occasion, the speaking right status presenting section 63 of the mobile phone B stops reproducing the music data indicating that no mobile phone has the speaking right.

In response, the speaking right status presentation control section 12 of the PoC server 10 transmits, to all the mobile phones other than the mobile phone B, a halt command (presentation control instruction) for instructing halt of the reproduction of the music data indicating that no mobile phone has the speaking right (S109). On this occasion, the speaking right managing section 11 may transmit, to all the mobile phones other than the mobile phone B, the speaking right information indicating that the speaking right is given to the mobile phone B.

Thereafter, in the PoC server 10, the speaking right managing section 11, having received the speaking right obtaining request, determines that the speaking right is going to be given to the mobile phone B, and transmits speaking right information indicating that the holder of the speaking right is the mobile phone B (S110).

Next, in the mobile phone B, the speaking right information acquiring section 62 detects, in accordance with the received speaking right information, that the speaking right has been given to the mobile phone B, notifies the user that the speaking right has been given thereto, and transmits the user's speech to the PoC server 10. The speech is broadcasted to other mobile phones B via the PoC server 10 (S111).

As described above, in cases where none of the mobile phones has the speaking right, the reproduction command (presentation control instruction) may be transmitted from the PoC server 10 to each of the mobile phones together with the music data; however, instead of the reproduction command, notification (status notification, speaking right information) may be made that none of the mobile phones has the speaking right. In this case, each of the mobile phones receives the status notification, accordingly detects that it is possible to acquire the speaking right, and reproduces music data (speaking right acquisition status presentation sound data) received together with the status notification.

Likewise, as described above, in cases where the speaking right is acquired by any of the mobile phones, the command (presentation control instruction) may be transmitted from the PoC server 10 to each of the mobile phones so as to instruct halt of the reproduction (or lowering of the volume) of the music data (speaking right acquisition status presentation sound data) having been reproduced. Instead of the command, notification (status notification, speaking right information) may be made that the mobile phone has the speaking right and it is therefore impossible to acquire the speaking right. In this case, each mobile phone receives the status notification, accordingly detects that it is impossible to acquire the speaking right, and stops the reproduction (or lowers the volume) of the music data (speaking right acquisition status presentation sound data).

In cases where the speaking right status presentation control section 12 transmits the status of the speaking right instead of the reproduction/halt command, the transmission of the speaking right information by the speaking right managing section 11 may not be carried out.

[2] Transmit only reproduction command for music data from the PoC server to each of the mobile phones, in cases where none of the mobile phones has the speaking right.

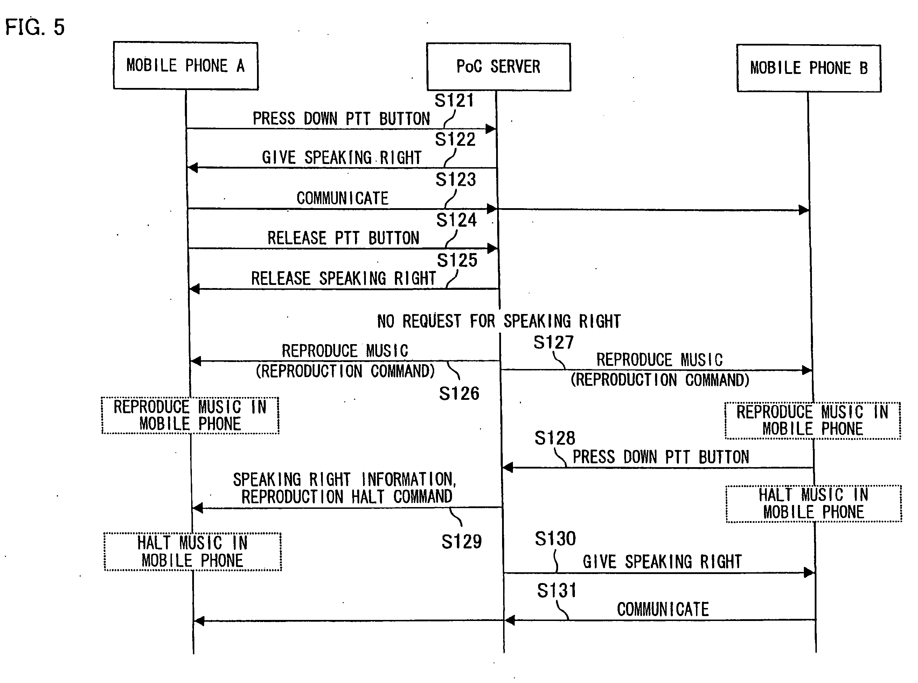

Figure 5 is a sequence diagram illustrating one example of an operation of the PoC communication system 100.

First, as shown in Figure 5, sequence (S 121 to S125) in which the mobile phone A acquires the speaking right, carries out communication, and releases the speaking right is the same as S101 to S 105 in [1].

Next, when no mobile phone makes a request for the speaking right, the speaking right status presentation control section 12 of the PoC server 10 transmits, to all the mobile phones, a reproduction command (presentation control instruction) instructing reproduction of the music data indicating that none of the mobile phones has the speaking right (S126, S127). The music data is stored in the storage section 50 of each mobile phone in advance. In each mobile phone, the speaking right status presenting section 63 reads out the instructed sound data (speaking right acquisition status presentation sound data) from the storage section 50 and causes the sound output section 45 to output it. Note that the PoC server 10 may be configured to wait for a predetermined period of time measured by the timer section 14, before confirming that none of the mobile phones makes a request for the speaking right.

Assume that the PTT button 43a is pressed down in the mobile phone B thereafter. On this occasion, the speaking right obtaining/releasing section 61 of the mobile phone B transmits a speaking right obtaining request to the PoC server 10 (S128). At the same time, in the mobile phone B, the speaking right status presenting section 63 stops the reproduction of the music data indicating that none of the mobile phones has the speaking right.

In response, in the PoC server 10, the speaking right status presentation control section 12 transmits a halt command (presentation control instruction) to all the mobile phones other than the mobile phone B so as to instruct halt of the reproduction of the music data indicating that no mobile phone has the speaking right. Further, the speaking right managing section 11 transmits, to all the mobile phones other than the mobile phone B, speaking right information indicating that the speaking right has been given to the mobile phone B (S129).

Subsequent sequence (S130 and S131) in which the mobile phone B obtains the speaking right and speeches are made is the same as S110 and S111 of [1], respectively.

As described above, in cases where none of the mobile phones has the speaking right, the reproduction command for the music data may be transmitted from the PoC server 10 to each of the mobile phones; however, instead of the reproduction command (presentation control instruction), notification (status notification, speaking right information) may be made that none of the mobile phones has the speaking right and it is possible to acquire the speaking right. In this case, each of the mobile phones receives the status notification, accordingly detects that it is possible to acquire the speaking right, and reproduces the music data (speaking right acquisition status presentation sound data) stored in advance in the storage section 50 of each of the mobile phones.

Likewise, as described above, in cases where any of the mobile phones has obtained the speaking right, the command (presentation control instruction) for instructing halt of the reproduction (or lowering of the volume) of the music data (speaking right acquisition status presentation sound data) may be transmitted from the PoC server 10 to each of the mobile phones; however, instead of the command, notification (status notification, speaking right information) may be made that any of the mobile phones has the speaking right and it is possible to acquire the speaking right. In this case, each mobile phone receives the status notification, accordingly detects that it is impossible to acquire the speaking right, and stops reproducing (or lowers the volume) the music data (speaking right acquisition status presentation sound data).

In cases where the speaking right status presentation control section 12 transmits the status of the speaking right instead of the reproduction/halt command, the transmission of the speaking right information by the speaking right managing section 11 may not be carried out.

[3] Each mobile phone reproduces music data in cases where a mobile phone has released the speaking right but the speaking right is given to none of the mobile phones.

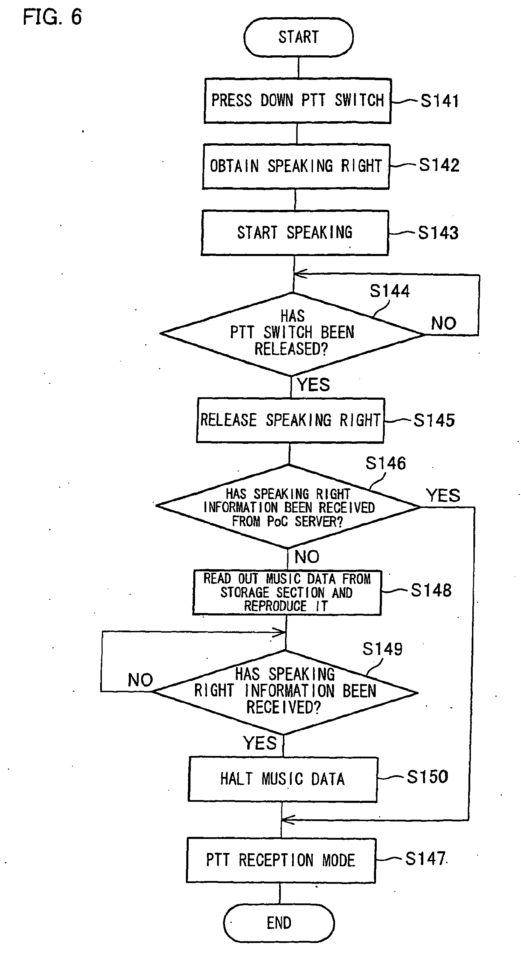

Figure 6 is a flowchart illustrating one example of operations of each of the mobile phones 40 constituting the PoC communication system 100.

First, as shown in Figure 6, sequence (S141 to S145) in which the mobile phone obtains the speaking right, carries out communication, and releases the speaking right is the same as S101 to S105 of [1].

Next, when the speaking right information acquiring section 62 of the mobile phone receives from the PoC server 10 the speaking right information indicating that the speaking right has been given to the other mobile phone (YES in S146), the mobile phone is brought into a PTT reception mode and receives a call from the other mobile phone having the speaking right (S147). Note that the mobile phone may be configured to wait for a predetermined period of time measured by the timer section 51, before receiving the speaking right information.

In the meanwhile, in cases where the speaking right information acquiring section 62 does not receive from the PoC server 10 the speaking right information indicating that the speaking right has been given to the other mobile phone (NO in S146), the speaking right status presenting section 63 reproduces the music data indicating that none of the mobile phones has the speaking right (S148). The music data is stored in advance in the storage section 50 of each of the mobile phones. Thereafter, in cases where the speaking right information acquiring section 62 receives, from the PoC server 10 during the reproduction of the music data, speaking right information indicating that the speaking right has been given to the other mobile phone (YES in S149), the speaking right status presenting section 63 stops the reproduction of the music data (S150), and the mobile phone is brought into the PTT reception mode and receives a call from the mobile phone having the speaking right (S147).

The flow above is applicable to not only a case where the mobile phone has released the speaking right but none of the mobile phones inclusive of the mobile phone is not given the speaking right, but also a case where none of the mobile phones inclusive of the mobile phone is not given the speaking right after receiving the last communication from the other mobile phone.

[4] When a mobile phone has the speaking right, the other mobile phones reproduce music data corresponding to the mobile phone having the speaking right.

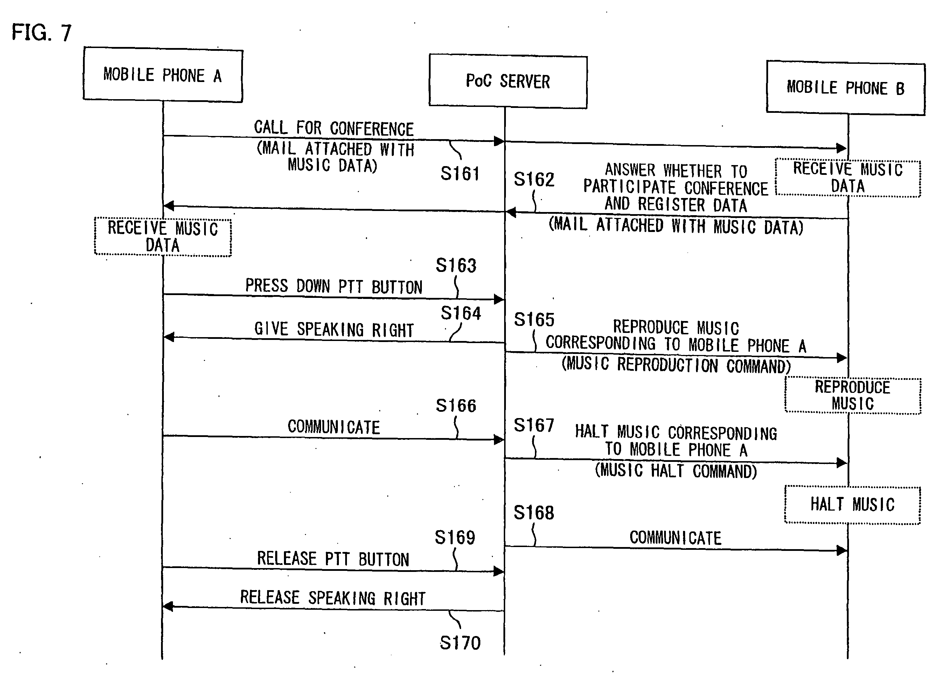

Figure 7 is a sequence diagram illustrating one example of operations of the PoC communication system 100.

First, as shown in Figure 7, a conference convocator's mobile phone A transmits a conference calling mail to a prospective participant's mobile phone B via the PoC server 10 (S161). The mail is attached with music data to be reproduced by the other mobile phones while the mobile phone A has the speaking right. The mobile phone B having received the conference calling mail correlates the attached music data with the identification information of the mobile phone A (or identification information of the user of the mobile phone A), and records it onto the storage section 50.

Next, the mobile phone B, the prospective participant of the conference, transmits an answer mail to mobile phones of prospective participants via the PoC server 10 (S162). The mail is attached with music data to be reproduced by the mobile phones other than the mobile phone B while the mobile phone B has the speaking right. Then, each of the other mobile phones having received the music data from the mobile phone B correlates the music data with the identification information of the mobile phone B (or identification information of the user of the mobile phone B), and records it onto the storage section 50.

To start the conference, the PTT button 43a of the mobile phone A is pressed down, with the result that the speaking right obtaining/releasing section 61 transmits a speaking right obtaining request to the PoC server 10 (S163).

In the PoC server 10, the speaking right managing section 11 receives the speaking right obtaining request, determines that the speaking right is going to be given to the mobile phone A, and transmits to the mobile phone A speaking right information indicating that the holder of the speaking right is the mobile phone A (S 164). On this occasion, in the PoC server 10, the speaking right status presentation control section 12 transmits a command (music reproduction command) to the mobile phone B so as to instruct to reproduce the music data while the mobile phone A has the speaking right (S165). Meanwhile, in the mobile phone B, the speaking right status presenting section 63 receives the music reproduction command, reads out from the storage section 50 the music data correlated with the mobile phone A, and reproduces it. Note that the speaking right information indicating that the speaking right has been given to the mobile phone A may be transmitted from the PoC server 10 to the mobile phone B together with the music reproduction command.

Next, when the PoC server 10 detects reception of speech data from the mobile phone A having the speaking right, the PoC server 10 causes the mobile phone B to stop reproducing the music data, before transmitting the speech data. Specifically, when the speech detecting section 15 of the PoC server 10 detects the user's speech in the speech data received from the mobile phone A (S 166), the speaking right status presentation control section 12 transmits a command (music halt command) to the mobile phone B so as to halt the reproduction of the music data (S167). The mobile phone B receives the music halt command, and the speaking right status presenting section 63 thereof stops the reproduction of the music data. Thereafter, the speech data is distributed from the PoC server 10 to the mobile phone B (S168).

Subsequent sequence (S 169 and S170) in which the mobile phone A releases the speaking right is the same as S104 and S105 of [1].

Note that when the speech detecting section 15 of the PoC server 10 detects a speech, a command of lowering the volume may be transmitted instead of transmitting the music halt command. In this case, the music data is reproduced as BGM during the speech. Further, the music data respectively corresponding to the mobile terminals may not be stored in each of the mobile terminals, but may be all stored in the storage section 13 of the PoC server 10 and be transmitted according to a speaking person together with a music reproduction command.

Further, in the step S165, the music reproduction command is transmitted from the PoC server 10, and the mobile phone B accordingly reproduces the music data as instructed by the music reproduction command. However, the music reproduction command may not be transmitted from the PoC server 10, and only speaking right information indicating that the speaking right has been given to the mobile phone A may be transmitted to the mobile phone B. In this case, in the mobile phone B, in accordance with the speaking right information received by the speaking right information acquiring section (speaking right information acquiring means) 62, the speaking right status presenting section (speaking right status presenting means) 63 specifies that the mobile phone A has the speaking right, reads out from the storage section 50 the music data correalted with the mobile phone A, and reproduces it.

As described above, while any of the mobile phones has the speaking right, a reproduction command (presentation control instruction) for instructing reproduction of music data corresponding to the mobile phone having the speaking right may be transmitted from the PoC server 10 to each of the mobile phones. However, instead of the reproduction command, the terminal identifier (device ID, user name, or speaking right information) of the mobile phone having the speaking right may be transmitted thereto. In this case, each of the mobile phones receives the terminal identifier, accordingly detects the mobile phone having the speaking right, and reproduces the music data (terminal identification sound data) stored in advance in the storage section 50 of each of the mobile phones. In cases where the speaking right status presentation control section 12 transmits the terminal identifier of the mobile phone having the speaking right instead of the reproduction command, the transmission of the speaking right information by the speaking right managing section 11 may not be carried out.

[5] Set a time limit on the speaking right and automatically give the speaking right to the next participant when time reaches the time limit.

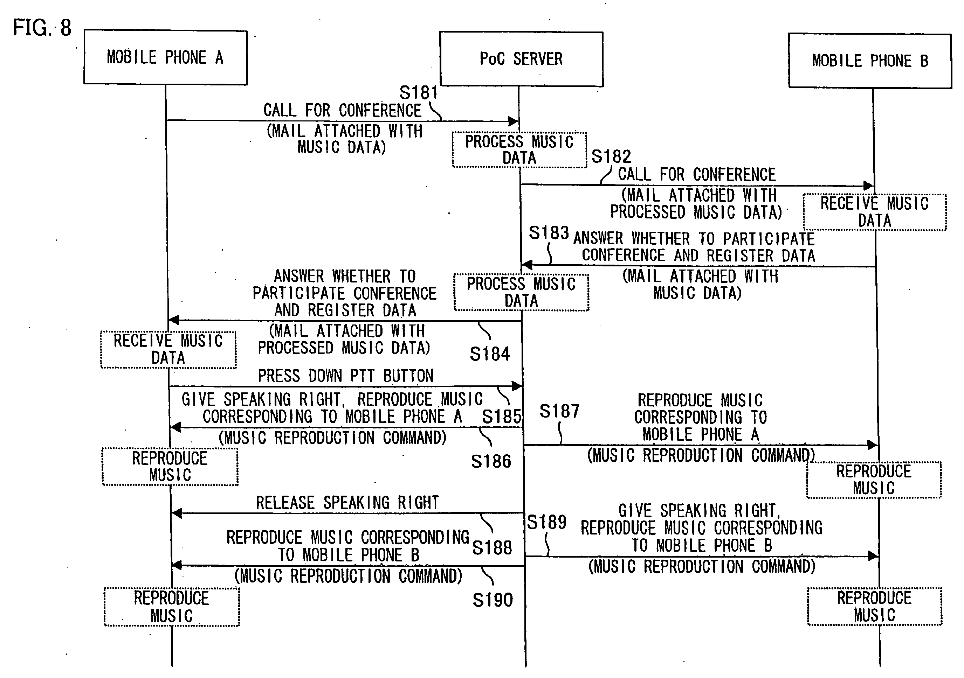

Figure 8 is a sequence diagram illustrating one example of operations of the PoC communication system 100.

First, as shown in Figure 8, the mobile phone A of the conference convocator transmits a conference calling mail to the PoC server 10 (S181). The mail is attached with music data to be reproduced by the other mobile phones while the mobile phone A has the speaking right.

Next, in the PoC server 10, the presentation data creating section 17 processes the music data, received from the mobile phone A, such that the music data is reproduced up to its end at time (time limit) until which the participant is allowed by one endowment of the speaking right to speak, and/or such that speed of reproducing the music data becomes faster as time comes closer to the time limit. Then, the speaking right status presentation control section 12 attaches the processed music data with the conference calling mail received from the mobile phone A, and transmits them to the mobile phone B (S182). Then, the mobile phone B receives the conference calling mail, correlates the attached music data with the identification information of the mobile phone A (or identification information of the user of the mobile phone A), and records it onto the storage section 50.

Next, the mobile phone B of the conference participant transmits an answer mail to the PoC server 10 (S183). The mail is attached with music data to be reproduced by the other mobile phones while the mobile phone B has the speaking right.

Next, in the PoC server 10, as with the music data received from the mobile phone A, the presentation data creating section 17 processes the music data received from the mobile phone B, and the speaking right status presentation control section 12 attaches the processed music data with the answer mail received from the mobile phone B and transmits them to the other mobile phones (S184). Each of the mobile phones receiving the answer mail correlates the attached music data with the identification information of the mobile phone B (or identification information of the user of the mobile phone B), and records it onto the storage section 50.

To start the conference, the PTT button 43a of the mobile phone A is pressed down, with the result that the speaking right obtaining/releasing section 61 transmits a speaking right obtaining request to the PoC server 10 (S185).

In the PoC server 10, the speaking right managing section 11 receives the speaking right obtaining request, determines that the speaking right is going to be given to the mobile phone A, and transmits to the mobile phone A speaking right information indicating that the holder of the speaking right is the mobile phone A (S186). Note that the speaking right information indicating that the speaking right has been given to the mobile phone A may be transmitted from the PoC server 10 to the mobile phone B other than the mobile phone A.

On this occasion, in the PoC server 10, the speaking right status presentation control section 12 transmits a command (music reproduction command) to all the mobile phones inclusive of the mobile phone A so as to instruct reproduction of the music data that should be reproduced while the mobile phone A has the speaking right (S186, S187). In each of all the mobile phones inclusive of the mobile phone A, the speaking right status presenting section 63 receives the music reproduction command, reads out from the storage section 50 the music data correlated with the mobile phone A, and reproduces it.

Next, in the PoC server 10, the timer section 14 measures time from the time at which the speaking right is given to the mobile phone A. When time reaches the time limit set on the speaking right held by the mobile phone A, the speaking right managing section 11 releases the speaking right from the mobile phone A, determines that the speaking right is going to be given to the mobile phone B, which is held by the next speaking person, and transmits to the mobile phone B the speaking right information indicating that the holder of the speaking right is the mobile phone B (S189). Note that the speaking right information indicating that the speaking right has been given to the mobile phone B may be transmitted from the PoC server 10 to the other mobile phones.

On this occasion, in the PoC server 10, the speaking right status presentation control section 12 transmits a command (music reproduction command) to all the mobile phones inclusive of the mobile phone B so as to instruct reproduction of the music data that should be reproduced while the mobile phone B has the speaking right (S189, S190). In each of all the mobile phones inclusive of the mobile phone B, the speaking right status presenting section 63 receives the music reproduction command, reads out from the storage section 50 the music data correlated with the mobile phone B, and reproduces it.

In the sequence, the time (time limit) until which a participant is allowed to speak by one endowment of the speaking right is set in the PoC server 10. In accordance with the time limit thus set, the PoC server 10 processes the sound data (terminal identification sound data), supplied from each participant, such that the sound data is reproduced up to its end at the time limit. For example, in cases where the time limit is set at 1 minute, the sound data is processed such that it is reproduced up to its end in one minute.

Further, the music data may be processed such that not only it is reproduced up to its end at the time limit but also the speed of reproducing the music data becomes faster as time comes closer to the time limit. For example, the speed of reproducing the music data is set to be gradually faster from approximately 10 seconds before the time limit. The speed of the music becomes thus faster, so that the speaker knows with ease that there is a little time left for him/her to speak.

Further, in the above sequence, the music data is created, in accordance with the music data registered from the participant, such that it is reproduced up to its end at the time limit (timeout time) set in the PoC server 10, and the music data thus created is distributed to each of the mobile phones. When time reaches the time limit, the reproduction of the music data is automatically halted, so that no music halt command is transmitted to the mobile phones. Of course, it is possible to halt the reproduction of the music data by transmitting a halt command to the mobile phones when time reaches the time limit.

In the above sequence, a speaking person provides music to be reproduced while he/she speaks, so that the PoC server 10 processes the music data. However, the step of processing the music data in PoC server 10 can be omitted in the following cases: (1) a case where music data prepared in advance in the PoC server 10 are shared among the participants, (2) a case where each participant provides music data corresponding to the time limit, (3) a case where the speed of reproducing the music data is not changed, and the like.

Further, the music data corresponding to the mobile terminals may not be stored in the mobile terminals respectively, but may all be stored in the storage section 13 of the PoC server 10 and be transmitted according to a speaking person together with a music reproduction command.

Further, it is possible to arbitrarily select, according to a purpose of a conference, a way in which the speaking right managing section 11 of the PoC server 10 determines a mobile phone to be given the speaking right. For example, an order of giving the speaking right may be set in advance, or a speaking person to be given the speaking right may be selected among people who have not spoken yet.

Unlike the above, instead of reproducing the music data, time left for the time limit may be notified by using a voice.

[6] Time from endowment of the speaking right to start of speech is set, and the speaking right is automatically given to the next participant if no speech is made until the time.

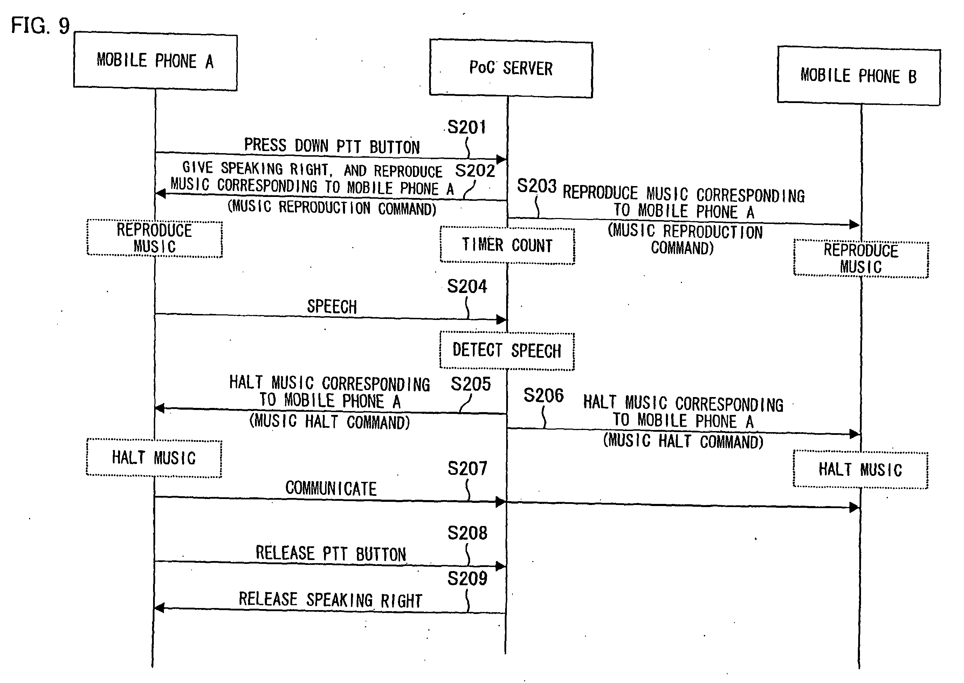

Figure 9 is a sequence diagram illustrating one example of operations of the PoC communication system 100.

First, as shown in Figure 9, the PTT button 43a is pressed down in the mobile phone A, and the speaking right obtaining/releasing section 61 therefore transmits a speaking right obtaining request to the PoC server 10 (S201).

In the PoC server 10, the speaking right managing section 11 receives the speaking right obtaining request, determines that the speaking right is going to be given to the mobile phone A, and transmits to the mobile phone A speaking right information indicating the holder of the speaking right is the mobile phone A (S202). Note that the speaking right indicating that the speaking right has been given to the mobile phone A may be transmitted from the PoC server 10 to the mobile phone B.

On this occasion, in the PoC server 10, the speaking right status presentation control section 12 transmits a command (music reproduction command) to all the mobile phones inclusive of the mobile phone A so as to instruct reproduction of music data that should be reproduced while the mobile phone A has the speaking right (S202, S203). In each of all the mobile phones inclusive of the mobile phone A, the speaking right status presenting section 63 receives the music reproduction command, reads out from the storage section 50 the music data correlated with the mobile phone A, and reproduces it.

Next, the PoC server 10 causes the timer section 14 to measure time from a moment at which the speaking right information is transmitted to the mobile phone A. In cases where the speech detecting section 15 detects a speech in speech data from the mobile phone A during a predetermined period of time (speech waiting time) (S204), the speaking right status presentation control section 12 transmits a command (music halt command) to all the mobile phones inclusive of the mobile phone A so as to halt the reproduction of the music data (S205, S206). Subsequent sequence (S207 to S209) in which speech is made via the mobile phone A and the speaking right is released therefrom is the same as S103 to S105 of [1].

Meanwhile, in cases where the speech detecting section 15 does not detect any speech in the speech data from the mobile phone A during the predetermined period of time, the speaking right status presentation control section 12 determines a mobile phone to be given the speaking right next.

Apart from the above, instead of reproducing the music data, time left for the time limit may be notified by using a voice.

[7] Give a speaking priority right to each of the mobile phones for a predetermined time from one mobile phone to another and give the speaking right to a mobile phone having transmitted a speaking right obtaining request while it has the speaking priority right.

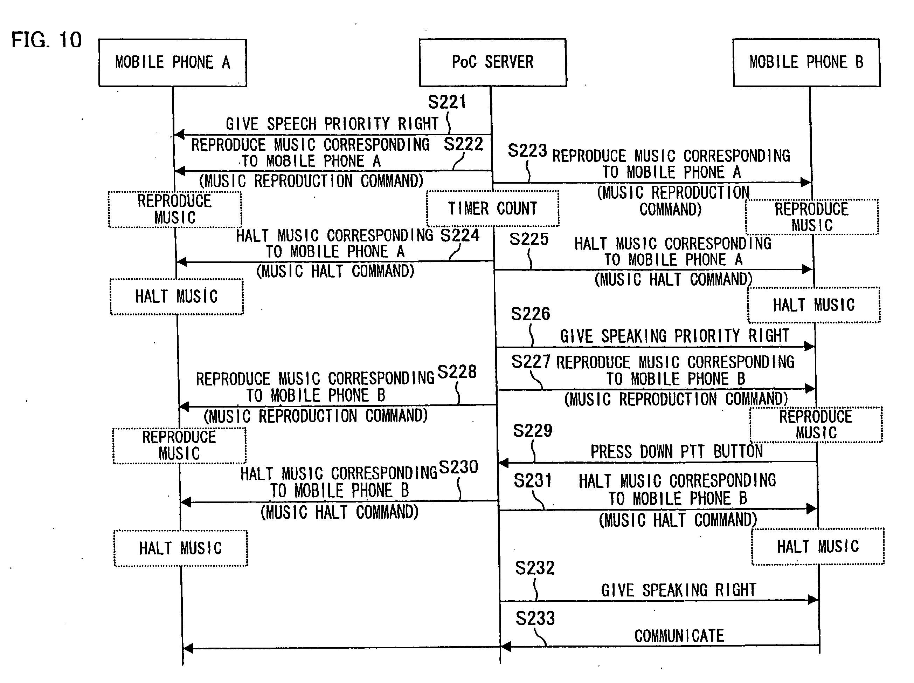

Figure 10 is a sequence diagram illustrating one example of operations of the PoC communication system 100.

First, as shown in Figure 10, in the PoC server 10, the speaking right managing section 11 selects the mobile phone A as a mobile phone to be given a speaking priority right, and transmits to the mobile phone A speaking right information indicating that the holder of the speaking priority right is the mobile phone A (S221). On this occasion, in the PoC server 10, the speaking right status presentation control section 12 transmits a command (music reproduction command) to all the mobile phones inclusive of the mobile phone A so as to instruct reproduction of music data that should be reproduced while the mobile phone A has the speaking priority right (S222, S223). In each of all the mobile phones inclusive of the mobile phone A, the speaking right status presenting section 63 receives the music reproduction command, reads out from the storage section 50 the music correlated with the mobile phone A, and reproduces it. Note that the speaking right information indicating that the speaking priority right has been given to the mobile phone A may be transmitted together with the music reproduction command from the PoC server 10 to the mobile phones other than the mobile phone A.

Next, the PoC server 10 causes the timer section 14 to measure time from a moment at which the speaking right information is transmitted to the mobile phone A. In cases where the speaking right managing section 11 does not receives a speaking right obtaining request from the mobile phone A during a predetermined time (speech priority time), the speaking right status presentation control section 12 transmits, after the speech priority time passes, a command (music halt command) to all the mobile phones inclusive of the mobile phone A so as to halt the reproduction of the music data (S224, S225).

Next, in the PoC server 10, the speaking right managing section 11 selects the mobile phone B as a mobile phone to be given the speaking priority right, and transmits to the mobile phone B speaking right information indicating that the holder of the speaking priority right is the mobile phone B (S226). On this occasion, in the PoC server 10, the speaking right status presentation control section 12 transmits a command (music reproduction command) to all the mobile phones inclusive of the mobile phone B so as to instruct reproduction of music data that should be reproduced while the mobile phone B has the speaking priority right (S227, S228). In each of all the mobile phones inclusive of the mobile phone B, the speaking right status presenting section 63 receives the music reproduction command, reads out from the storage section 50 the music correlated with the mobile phone B, and reproduces it. Note that the speaking right information indicating that the speaking priority right has been given to the mobile phone B may be transmitted together with the music reproduction command from the PoC server 10 to the mobile phones other than the mobile phone B.

Next, the PoC server 10 causes the timer section 14 to measure time from a moment at which the speaking right information is transmitted to the mobile phone B. Here, if the mobile phone B transmits thereto a speaking right obtaining request during a period of time (speech priority time) measured from the reception of the speaking right information indicating that the speaking right has been given to the mobile phone B, the mobile phone B can obtain the speaking right.

Now, assume that the PTT button 43a is pressed down in the mobile phone B and the speaking right obtaining/releasing section 61 accordingly transmits a speaking right obtaining request to the PoC server 10 (S229). On this occasion, in the PoC server 10, the speaking right status presentation control section 12 transmits a command (music halt command) to all the mobile phones inclusive of the mobile phone B so as to instruct halt of the reproduction of the music data (S230, S231). Further, in the PoC server 10, the speaking right managing section 11 receives the speaking right obtaining request, determines that the speaking right is going to be given to the mobile phone B, and transmits to the mobile phone B speaking right information indicating that the holder of the speaking right is the mobile phone B (S232). Note that the speaking right information indicating that the speaking right has been given to the mobile phone B may be transmitted from the PoC server 10 to the mobile phones other than the mobile phone B. This makes it possible for the mobile phone B to communicate with the other mobile phones (S232).

[8] In cases where none of the mobile phones has the speaking right, the PoC sever judges contents of conversation in accordance with an immediately preceding speech and transmits, to each mobile phone, CM data corresponding to the contents and a reproduction command.

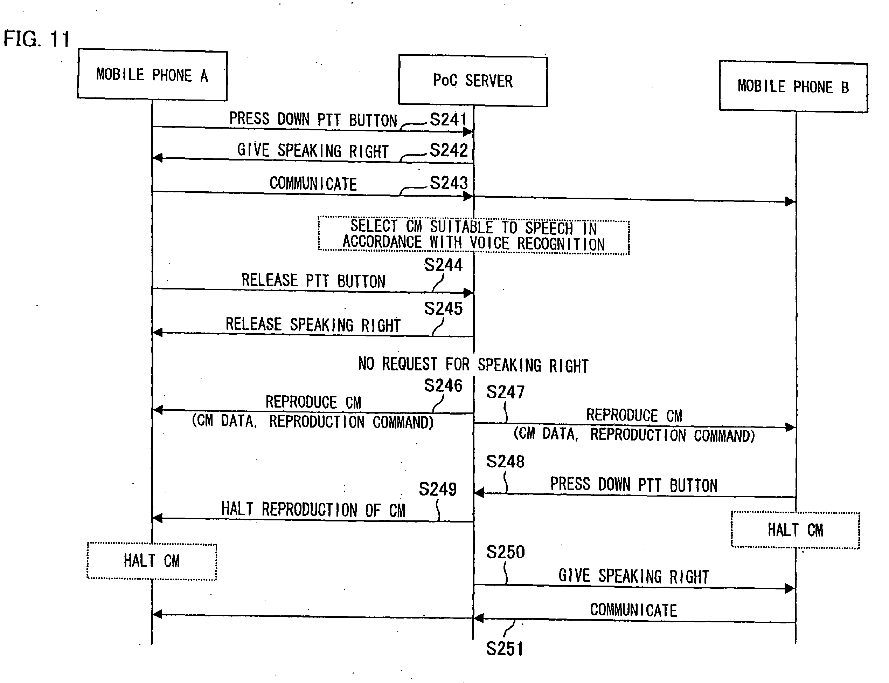

Figure 11 is a sequence diagram illustrating one example of operations of the PoC communication system 100.

First, as shown in Figure 11, sequence (S241 to S245) in which the mobile phone A obtains the speaking right, carries out communication, and releases the speaking right is the same as S101 to S 105 of [1].

However, in the present sequence, while a speech is being made via the mobile phone A, the voice recognizing section 16 of the PoC server 10 carries out voice recognition in accordance with speech data received from the mobile phone A, specifies the contents of the speech, and selects CM data suitable to the contents.

In cases where none of the mobile phones makes a request for the speaking right after the mobile phone A releases the speaking right, the speaking right status presentation control section 12 of the PoC server 10 transmits to all the mobile phones (i) the selected CM data read out from the storage section 13 and (ii) the reproduction command (presentation control instruction) for instructing to reproduce the CM data (S246, S247). Note that the CM data is stored in advance in the storage section 13, but may be distributed from a sponsor's website or the like in a streaming manner. Further, in each of the mobile phones, the speaking right status presenting section 63 causes the sound output section 45 to output the received CM data. Further, the PoC server 10 may be configured to wait for reception of the speaking right from the mobile phone, by a predetermined period of time measured by the timer section 14.

Now, assume that the PTT button 43a is thereafter pressed down in the mobile phone B. In response, the speaking right obtaining/releasing section 61 of the mobile phone B transmits a speaking right obtaining request to the PoC server 10 (S248). On this occasion, the speaking right status presenting section 63 of the mobile phone B halts the reproduction of the CM data.

In response, in the PoC server 10, the speaking right status presentation control section 12 sends a halt command (presentation control instruction) to all the mobile phones except the mobile phone B so as to halt the reproduction of the CM data (S109). Note that the speaking right managing section 11 may transmit, to all the mobile phones except the mobile phone B, the speaking right information indicating that the speaking right has been given to the mobile phone B.

Thereafter, in the PoC server 10, the speaking right managing section 11 receives the speaking right obtaining request, determines that the speaking right is going to be given to the mobile phone B, and transmits to the mobile phone B speaking right information indicating that the holder of the speaking right is the mobile phone B (S250). This makes it possible for the mobile phone B to communicate with the other mobile phones (S251).

In the above sequence, the CM data is transmitted from the PoC server 10 to each of the mobile phones together with the reproduction command. However, the CM data may be stored in each of the mobile phones, and only the reproduction command may be transmitted from the PoC server 10 to each of the mobile phones.

Further, a CM may be selected in accordance with participant's preference information, which is collected by using an answer mail to a conference calling mail.

Further, the following CM distribution becomes possible when the PoC server 10 utilizes a function of judging the contents of a conversation and transmitting, to each of the mobile phones, CM data suitable to the contents and a reproduction command.

First, the mobile phone extracts the preference information from the contents of the speech, and the mobile phone transmits the extracted preference information to the PoC server 10. Upon an electronic conference, the PoC server 10 transmits, to the mobile phone in accordance with the preference information received from the mobile phone, (i) appropriate CM data relating to the contents of the speech or (ii) simple CM data and a URL (Uniform Resource Locator) of a web page presenting a detailed CM. This allows the participant to make reference to the detailed CM after the conference.

Here, the mobile phone may be configured such that reception of the speaking right is restricted during first reproduction of the CM data so as not to interrupt the reproduction thereof, and such that reception thereof is always allowed upon the second or later reproduction of the CM data irrespective of the interruption. This makes it possible to present the CM data at least one time to the user. Further, the number of times reproduction of the CM data carried out without interruption may be counted from the second reproduction on, and the number may reflect in an advertisement rate.

Further, in the PoC communication system 100 of the present embodiment, a conference convocator may set music. Further, music may be set in accordance with requests from participants, or may be set by majority vote among the participants. Further, the music may be reproduced from a point at which previous reproduction has been temporarily halted. Further, whether or not music is to be reproduced may be determined in accordance with a presence condition of each mobile phone (e.g., no music is played back while the mobile phone is in the speaker phone condition because the user views the screen, etc). The music data stored in the storage section 13 and/or the storage section 50 may be music data downloaded in advance from a data distribution service or the like. Alternatively, in cases where streaming data is used therefor, the address of a data distribution service website designated by each user may be stored in the storage section 50, and reception of a music reproduction command or a status notification triggers each mobile phone to make access to the data distribution website whose address is stored in the mobile phone, thereby reproducing the data in a streaming manner. In cases where the sound data is to be downloaded and used, the sound data may be distributed from one participant in consideration of (i) the participants' communication condition and (ii) charges on contents to be downloaded. Further, a CM may be reproduced according to a conference convocator's attribute, a group attribute, or a topic in communication. Further, the contents of a CM may be changed according to the number of reproduction, communication charge, or the like.

Further, the sound data may be voice data available from, e.g., an Internet radio. In the case where the sound data is voice data, it is desirable to make a notification (sound, display, vibration, etc.,) for indicating that the sound data is not a speech of a participant but voice data. Note that it is described above that the terminal identification sound data represents music corresponding to each speaking person (or a terminal operated by the speaking person); however, the speaking right acquisition status presentation sound data can be sound data corresponding to each speaking person (or the terminal operated by the speaking person).

Further, in cases where the PoC server 10 carries out voice recognition in accordance with speech data received from a mobile phone, specifies the contents of the speech, and carries out control in accordance with the contents, the PoC communication system 100 may be configured to beforehand obtain consensus, regarding that the PoC server 10 will recognize the contents of a speech, among participants of an electronic conference. For example, control may be carried out according to the contents of a speech only when all the participants of the electronic conference agree with the voice recognition. Alternatively, only a speech made by a participant who agrees therewith may be recognized and control may be carried out according to the contents of the speech.

Further, such voice recognition for recognizing the contents of a speech in accordance with speech data may be carried out by the PoC server 10 as described above, but may be carried out by each of the mobile phones. In cases where the mobile phone carries out voice recognition in accordance with the speech data, specifies the contents of the speech, and carries out control in accordance with the contents, it is possible to carry out different control among the mobile phones.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

Note that an electronic conference system according to the present invention includes: a plurality of terminal devices that are able to communicate with one another; and an electronic conference managing device for giving a speaking right to a terminal device, wherein either of each of the terminal devices and the electronic conference managing device includes speaking right status presentation control means for causing each of the terminal devices to output, when either of each of the terminal devices and the electronic conference managing device detects a status that the speaking right is given to none of the terminal devices, a speaking right acquisition status presentation sound indicating the status.

Further, an electronic conference system according to the present invention includes: a plurality of terminal devices that are able to communicate with one another; and an electronic conference managing device for giving a speaking right to a terminal device, either of each of the terminal devices and the electronic conference managing device including speaking right status presentation control means for causing each of the terminal devices to output, when either of each of the terminal devices and the electronic conference managing device detects a status that the speaking right is given to none of the terminal devices, a speaking right acquisition status presentation sound indicating the status.

According to the above configurations, in cases where either of each terminal device and the electronic conference managing device detects, during an electronic conference, that the speaking right is not given to any of the terminal devices, either of each terminal device and the electronic managing device causes each of the terminal devices to output a speaking right acquisition status presentation sound indicating that the speaking right is not given to none of the terminal devices. This allows the participant to confirm that the speaking right can be obtained, while the speaking right is available. Note that the speaking right acquisition status presentation sound data representing the sound to be outputted by each of the terminal devices may be stored in advance in each of the terminal devices or may be acquired from outside as streaming data.

Further, an electronic conference system according to the present invention includes a plurality of terminal devices that are able to communicate with one another, and an electronic conference managing device for giving a speaking right to a terminal device, the electronic conference managing device including speaking right status presentation control means for transmitting to the terminal devices, under a condition that the speaking right is given to none of the terminal devices, an output command of instructing output of a speaking right acquisition status presentation sound indicating the condition.

Further, an electronic conference managing device according to the present invention gives a speaking right to any of a plurality of terminal devices that are able to communicate with one another, and the electronic conference managing device includes: speaking right status presentation control means for transmitting to the terminal devices, under a condition that the speaking right is given to none of the terminal devices, an output command of instructing output of a speaking right acquisition status presentation sound indicating the condition.

An electronic conference managing method according to the present invention is utilized in an electronic conference system including (i) a plurality of terminal devices that are able to communicate with one another and (ii) an electronic conference managing device for giving a speaking right to a terminal device, the electronic conference managing device including speaking right status presentation control means for transmitting to the terminal devices, under a condition that the speaking right is given to none of the terminal devices, an output command of instructing output of a speaking right acquisition status presentation sound indicating the condition.

According to the above configurations and method, in cases where the speaking right has not been given to any of the terminal devices during an electronic conference, the electronic conference managing device transmits, to the terminal devices, the output command of instructing the output of the speaking right acquisition status presentation sound indicating that none of the terminal devices has the speaking right. This makes it possible for each of the terminal devices of the participants to output the speaking right acquisition status presentation sound indicating that the speaking right can be acquired, when the speaking right has not been given to any of the terminal devices. Via the sound, each of the participants confirms that the speaking right can be obtained, while the speaking right is available.

Further, an electronic conference system according to the present invention includes a plurality of terminal devices that are able to communicate with one another, and an electronic conference managing device for giving a speaking right to a terminal device, the electronic conference managing device including speaking right status presentation control means for notifying, under a condition that the speaking right is given to none of the terminal devices, the condition to each of the terminal devices so as to cause each of the terminal devices to output a speaking right acquisition status presentation sound indicating the condition.

Further, an electronic conference managing device according to the present invention gives a speaking right to any of a plurality of terminal devices that are able to communicate with one another, the electronic conference managing device, including: speaking right status presentation control means for notifying, under a condition that the speaking right is given to none of the terminal devices, the condition to each of the terminal devices so as to cause each of the terminal devices to output a speaking right acquisition status presentation sound indicating the condition.

Further, an electronic conference managing method according to the present invention is utilized in an electronic conference system including (i) a plurality of terminal devices that are able to communicate with one another and (ii) an electronic conference managing device for giving a speaking right to a terminal device, the electronic conference managing device including speaking right status presentation control means for notifying, under a condition that the speaking right is given to none of the terminal devices, the condition to each of the terminal devices so as to cause each of the terminal devices to output a speaking right acquisition status presentation sound indicating the condition.

According to the above configurations and method, in cases where the speaking right has not been given to any of the terminal devices during an electronic conference, the electronic conference managing device notifies the terminal devices that none of the terminal devices has the speaking right. This makes it possible for each of the terminal devices of the participants to output the speaking right acquisition status presentation sound indicating that the speaking right can be acquired, when each of the terminal devices receives the notification that the speaking right has not been given to any of the terminal devices. Via the sound, each of the participants confirms that the speaking right can be obtained, while the speaking right is available.

Further, the electronic conference system according to the present invention is configured such that: the speaking right status presentation control means transmits the speaking right acquisition status presentation sound to each of the terminal devices together with the output command.

According to the above configuration, during an electronic conference, the electronic conference managing device transmits the speaking right acquisition status presentation sound together with the output command, to the terminal devices. This makes it unnecessary to store the speaking right acquisition status presentation sound data in each of the terminal devices in advance.

Further, the electronic conference system according to the present invention is configured such that: each of the terminal devices includes speaking right status presenting means for reading out the speaking right acquisition status presentation sound data from a storage section and reproducing the speaking right acquisition status presentation sound data thus read out.

According to the above configuration, during an electronic conference, each of the terminal devices reads out the speaking right acquisition status presentation sound data from the storage section and reproduces it. As such, the speaking right acquisition status presentation sound data is stored in advance in the terminal device, so that the speaking right acquisition status presentation sound does not need to be acquired from outside such as an electronic conference managing device every time outputting is carried out.

Further, the electronic conference system according to the present invention is configured such that: each of the terminal devices outputs the speaking right acquisition status presentation sound after passage of a certain period of time during which the speaking right is given to none of the terminal devices.

According to the above configuration, each of the terminal devices outputs the speaking right acquisition status presentation sound after passage of the certain time during which the speaking right is given to none of the terminal devices. This surely causes a blank state every time the speaking right is changed, so that it is possible to prevent a sound of several seconds from being inserted interruptedly.

Further, an electronic conference system according to the present invention includes a plurality of terminal devices that are able to communicate with one another, and an electronic conference managing device for giving a speaking right to a terminal device, the electronic conference managing device including speaking right status presentation control means for transmitting, when the electronic conference managing device receives a speaking right obtaining request from any of the terminal devices, to the other terminal devices, either (i) a command of instructing halt of output of a speaking right acquisition status presenting sound indicating that the speaking right is given to none of the terminal devices, or (ii) a command of instructing lowering of a volume of the output of the speaking right acquisition status presentation sound.

Further, an electronic conference managing device according to the present invention gives a speaking right to any of a plurality of terminal devices that are able to communicate with one another, the electronic conference managing device, including: speaking right status presentation control means for transmitting, when the electronic conference managing device receives a speaking right obtaining request from any of the terminal devices, to the other terminal devices, either (i) a command of instructing halt of output of a speaking right acquisition status presenting sound indicating that the speaking right is given to none of the terminal devices, or (ii) a command of instructing lowering of a volume of the output of the speaking right acquisition status presentation sound.

Further, an electronic conference managing method according to the present invention is utilized in an electronic conference system including (i) a plurality of terminal devices that are able to communicate with one another and (ii) an electronic conference managing device for giving a speaking right to a terminal device, the electronic conference managing device including speaking right status presentation control means for transmitting, when the electronic conference managing device receives a speaking right obtaining request from any of the terminal devices, to the other terminal devices, either (i) a command of instructing halt of output of a speaking right acquisition status presenting sound indicating that the speaking right is given to none of the terminal devices, or (ii) a command of instructing lowering of a volume of the output of the speaking right acquisition status presentation sound.

According to the configurations and method, in cases where the electronic conference managing device receives a speaking right obtaining request from any of the terminal devices during an electronic conference, the electronic conference managing device transmits, to the other terminal devices, either (i) the command of instructing halt of the speaking right acquisition status presentation sound indicating that the speaking right is given to none of the terminal devices or (ii) the command of instructing lowering of the volume of the output of the speaking right acquisition status presentation sound. Accordingly, in each of the other terminal devices, the output of the speaking right acquisition status presentation sound is halted or the volume of the output thereof is lowered, so that it is possible to confirm that the speaking right has been given to somebody, while the participant can listen to the speech without being prevented by the sound.

In the case of lowering the volume of the output of the speaking right acquisition status presentation sound, the speaking right acquisition status presentation sound is outputted as BGM. Each of the terminal devices thus halts or lowers the volume of the output of the speaking right acquisition status presentation sound in accordance with the command sent from the electronic conference managing device, and may start the output thereof in accordance with an output command sent from the electronic conference managing device as described later. Alternatively, the output of the speaking right acquisition status presentation sound may be triggered by, e.g., an instruction of the user of the terminal device.

Further, an electronic conference system according to the present invention includes a plurality of terminal devices that are able to communicate with one another, and an electronic conference managing device for giving a speaking right to a terminal device, when any of the terminal devices obtains the speaking right, the electronic conference managing device making a notification, to the terminal devices, that the speaking right has been obtained, when each of the terminal devices receives the notification indicating that the any of the terminal devices has obtained the speaking right, the terminal device halting output of a speaking right acquisition status presentation sound indicating that the speaking right is given to none of the terminal devices, or lowering a volume of the output of the speaking right acquisition status presentation sound.

Further, an electronic conference managing device according to the present invention gives a speaking right to any of a plurality of terminal devices that are able to communicate with one another, the electronic conference managing device, including: speaking right status presentation control means for notifying, when any of the terminal devices obtains the speaking right, the terminal devices that the speaking right has been obtained, so as to halt output of a speaking right acquisition status presentation sound indicating that the speaking right is given to none of the terminal devices, or lower a volume of the output of the speaking right acquisition status presentation sound.

Further, an electronic conference managing method according to the present invention is utilized in an electronic conference system including (i) a plurality of terminal devices that are able to communicate with one another and (ii) an electronic conference managing device for giving a speaking right to a terminal device, the electronic conference managing device including speaking right status presentation control means for notifying, when the electronic conference managing device receives a speaking right obtaining request from any of the terminal devices, the terminal devices that the speaking right has been obtained, so as to halt output of a speaking right acquisition status presentation sound indicating that the speaking right is given to none of the terminal devices, or lower a volume of the output of the speaking right acquisition status presentation sound.

According to the above configurations and method, in cases where the electronic conference managing device receives a speaking right obtaining request from any of the terminal devices, the electronic conference managing device notifies the terminal devices that the speaking right obtaining request has been received. In response to reception of the notification, each of the terminal devices halts the output of the speaking right acquisition status presentation sound indicating that the speaking right is not given to any of the terminal devices, or lowers the volume of the output of the speaking right acquisition status presentation sound. In this way, in each of the other terminal devices, the output of the speaking right acquisition status presentation sound is halted or the volume of the output thereof is lowered, so that it is possible to confirm that the speaking right has been given to somebody, while the participant can listen to the speech without being prevented by the sound.

In the case of lowering the volume of the output of the speaking right acquisition status presentation sound, the speaking right acquisition status presentation sound is outputted as BGM. Each of the terminal devices thus halts or lowers the volume of the output of the speaking right acquisition status presentation sound in accordance with the command sent from the electronic conference managing device, and may start the output thereof in accordance with an output command sent from the electronic conference managing device as described later. Alternatively, the output of the speaking right acquisition status presentation sound may be triggered by, e.g., an instruction of the user of the terminal device.

Further, the electronic conference system according to the present invention is configured such that: the electronic conference managing device further includes voice recognizing means for recognizing a content of speech from speech data sent from the terminal device having the speaking right, and the speaking right status presentation control means selects, in accordance with the content recognized by the voice recognizing means, the speaking right acquisition status presentation sound that the terminal devices are to be instructed to output.

Further, the electronic conference managing device according to the present invention further includes: voice recognizing means for recognizing a content of speech from speech data sent from the terminal device having the speaking right, and the speaking right status presentation control means selects, in accordance with the content recognized by the voice recognizing means, the speaking right acquisition status presentation sound that the terminal devices are to be instructed to output.

According to the above configurations, the electronic conference managing device recognizes the content of speech, and selects, in accordance with the content thereof, the speaking right acquisition status presentation sound that each of the terminal devices is instructed to output. This allows the terminal devices to output a speaking right acquisition status presentation sound relating to the topic of the speech. Accordingly, a person who participates in the electronic conference halfway can understand the topic with ease.

Further, an electronic conference system according to the present invention includes a plurality of terminal devices that are able to communicate with one another, and an electronic conference managing device for giving a speaking right to each of the terminal devices, the electronic conference managing device, including: speaking right managing means for receiving a speaking right obtaining request from any of the terminal devices, and giving the speaking right to the any of the terminal devices; and speaking right status presentation control means for transmitting, when the speaking right managing means gives the speaking right to the any of the terminal devices, to the other terminal devices, an output command of instructing output of a terminal identification sound correlated with the any of the terminal devices.

Further, an electronic conference managing device according to the present invention gives a speaking right to any of a plurality of terminal devices that are able to communicate with one another, the electronic conference managing device, including: speaking right managing means for receiving a speaking right obtaining request from the any of the terminal devices, and giving the speaking right to the any of the terminal devices; and speaking right status presentation control means for transmitting, when the speaking right managing means gives the speaking right to the any of the terminal devices, to the other terminal devices, an output command of instructing output of a terminal identification sound correlated with the any of the terminal devices.

Further, an electronic conference managing method according to the present invention is utilized in an electronic conference system including (i) a plurality of terminal devices that are able to communicate with one another and (ii) an electronic conference managing device for giving a speaking right to a terminal device, in cases where speaking right managing means of the electronic conference managing device receives a speaking right obtaining request from any of the terminal devices and gives the speaking right to the any of the terminal devices, speaking right status presentation control means of the electronic conference managing device transmits, to the other terminal devices, an output command of instructing output of a terminal identification sound correlated with the any of the terminal devices.

According to the above configurations and method, in cases where the electronic conference managing device receives a speaking right obtaining request from any of the terminal devices during an electronic conference and gives the speaking right thereto, the electronic conference managing device transmits, to the other terminal devices, the output command of instructing the output of the terminal identification sound correlated with the terminal device given the speaking right. This allows the other terminal devices to output the terminal identification sound correlated with the terminal device given the speaking right. Via the sound, each participant confirms who has been given the speaking right.

Further, an electronic conference system according to the present invention includes a plurality of terminal devices that are able to communicate with one another, and an electronic conference managing device for giving a speaking right to a terminal device, the electronic conference managing device, including: speaking right managing means for receiving a speaking right obtaining request from any of the terminal devices, and giving the speaking right to the any of the terminal devices; and speaking right status presentation control means for transmitting, when the speaking right managing means gives the speaking right to the any of the terminal devices, to the other terminal devices, a terminal identifier by which the terminal device having the speaking right is identified, so as to cause each of the other terminal devices to output a terminal identification sound correlated with the terminal device identified by the terminal identifier.

Further, an electronic conference managing device according to the present invention gives a speaking right to any of a plurality of terminal devices that are able to communicate with one another, the electronic conference managing device, including: speaking right managing means for receiving a speaking right obtaining request from the any of the terminal devices, and giving the speaking right to the any of the terminal devices; and speaking right status presentation control means for transmitting, when the speaking right managing means gives the speaking right to the any of the terminal devices, to the other terminal devices, a terminal identifier by which the terminal device having the speaking right is identified, so as to cause each of the other terminal devices to output a terminal identification sound correlated with the terminal device identified by the terminal identifier.

Further, an electronic conference managing method according to the present invention is utilized in an electronic conference system including (i) a plurality of terminal devices that are able to communicate with one another and (ii) an electronic conference managing device for giving a speaking right to a terminal device, in cases where speaking right managing means of the electronic conference managing device receives a speaking right obtaining request from any of the terminal devices and gives the speaking right to the any of the terminal devices, speaking right status presentation control means of the electronic conference managing device transmits a terminal identifier by which the terminal device having the speaking right is identified, so as to cause each of the other terminal devices to output a terminal identification sound correlated with the terminal device identified by the terminal identifier.

According to the above configurations and method, in cases where the electronic conference managing device receives a speaking right obtaining request from any of the terminal devices and gives the speaking right thereto during an electronic conference, the electronic conference managing device transmits, to the other terminal devices, the terminal identifier by which the terminal device given the speaking right is identified. Each of the other terminal devices outputs the terminal identification sound correlated with the received terminal identifier. Via the sound, each participant confirms who has been given the speaking right.

Further, the electronic conference system according to the present invention is configured such that: the electronic conference managing device further includes voice recognizing means for recognizing a content of a speech from speech data received from the terminal device having the speaking right, and the speaking right status presentation control means selects, in accordance with the content recognized by the voice recognizing means, the speaking right acquisition status presentation sound that the terminal devices are to be instructed to output.

According to the above configuration, the electronic conference managing device recognizes the content of speech, and selects, in accordance with the content thereof, the speaking right acquisition status presentation sound that each of the terminal devices is instructed to output. This allows the terminal devices to output a speaking right acquisition status presentation sound relating to the topic of the speech. Accordingly, a person who participates in the electronic conference halfway can understand the topic with ease.

Further, the electronic conference system according to the present invention is configured such that: the electronic conference managing device further includes speech detecting means for detecting a speech of a participant from speech data received from the terminal device having the speaking right, and when the speech detecting means detects the speech, the speaking right status presentation control means transmits, to the other terminal devices, (i) a command of instructing halt of output of a speaking right acquisition status presentation sound indicating that the speaking right is given to none of the terminal devices, or (ii) a command of instructing lowering of a volume of the output of the speaking right acquisition status presentation sound.

Further, the electronic conference managing device according to the present invention further includes: speech detecting means for detecting a speech of a participant from speech data received from the terminal device having the speaking right, wherein: when the speech detecting means detects the speech, the speaking right status presentation control means transmits, to the other terminal devices, (i) a command of instructing halt of output of a terminal identification sound correlated with the terminal device having the speaking right, or (ii) a command of instructing lowering of a volume of the output of the terminal identification sound.

According to the above configuration, when a speech is detected during an electronic conference, the electronic conference managing device transmits, to the other terminal devices, either (i) the command of instructing halt of output of the terminal identification sound correlated with the terminal device having the speaking right or (ii) the command of instructing lowering of the volume of the terminal identification sound. The output of the terminal identification sound is thus halted or the volume of the output is decreased in each of the other terminal devices, so that it is possible to confirm that a speech has been started and to listen to the speech without being prevented by the sound. In the case where the volume of the output of the terminal identification sound is lowered, the sound is outputted in a BGM manner.

Further, the electronic conference system according to the present invention is configured such that: the electronic conference managing device further includes speech detecting means for detecting a speech of a participant from speech data received from the terminal device having the speaking right, when the speech detecting means detects the speech, the speaking right status presentation control means notifies the terminal devices that the speech detecting means detects the speech, so as to instruct the terminal devices to halt output of a speaking right acquisition status presentation sound indicating that the speaking right is given to none of the terminal devices, or instruct the terminal devices to lower a volume of the output of the speaking right acquisition status presentation sound.

Further, the electronic conference managing device according to the present invention further includes: speech detecting means for detecting a speech of a participant from speech data received from the terminal device having the speaking right, wherein: when the speech detecting means detects the speech, the speaking right status presentation control means notifies the terminal devices that the speech detecting means detects the speech, so as to cause the terminal devices to halt output of a terminal identification sound correlated with the terminal device having the speaking right, or cause the terminal devices to lower a volume of the output of the terminal identification sound.

According to the above configurations, when a speech is detected during an electronic conference, the electronic conference managing device notifies the other terminal devices that a speech has been started. The other terminal devices receives the notification, and accordingly instructs halt of output of the terminal identification sound correlated with the terminal device having the speaking right, or lowers the volume of the output of the terminal identification sound. The output of the terminal identification sound is thus halted or the volume of the output is lowered in each of the other terminal devices, so that it is possible to confirm that a speech has been started and to listen to the speech without being prevented by the sound. In the case where the volume of the output of the terminal identification sound is lowered, the sound is outputted in a BGM manner.

Further, the electronic conference system according to the present invention is configured such that: the speaking right given by the speaking right managing means of the electronic conference managing device is set with a time limit for a period during which speaking is allowed, the speaking right acquisition status presentation sound that the speaking right status presentation control means of the electronic conference managing device instructs to be outputted is created such that the outputting of the speaking right acquisition status presentation sound comes to an end when time reaches the time limit.

Further, the electronic conference managing device according to the present invention is configured such that: the speaking right given by the speaking right managing means is set with a time limit for a period during which speaking is allowed, the terminal identification sound that the speaking right status presentation control means instructs to be outputted is created such that the outputting of the speaking right acquisition status presentation sound comes to an end when time reaches the time limit.

According to the above configurations, each of the terminal devices is allowed to output the terminal identification sound such that it comes to an end when time reaches the time limit. This makes it possible for the participant to confirm, via the sound, who has been given the speaking right, and confirm the time limit of the speaking right by outputting the sound edited such that it comes to end when time reaches the time limit.

Further, the electronic conference system according to the present invention is configured such that: the speaking right acquisition status presentation sound that the speaking right status presentation control means of the electronic conference managing device instructs to be outputted is created such that speed of the sound is changed as time comes closer to the time limit.

Further, the electronic conference managing device according to the present invention is configured such that: the speaking right acquisition status presentation sound that the speaking right status presentation control means instructs to be outputted is created such that speed of the sound is changed as time comes closer to the time limit.

According to the above configurations, the speed of reproducing the terminal identification sound data changes as time comes close to the end of the time limit of the speaking right, so that it is possible to confirm the time limit of the speaking right and adjust the content of speech.

Further, the electronic conference system according to the present invention is configured such that: the electronic conference managing device further includes a storage section for storing sound data, and upon transmitting to the terminal devices an output command of instructing output of speaking right acquisition status presentation sound data and terminal identification sound data, the speaking right status presentation control means reads out the speaking right acquisition status presentation sound data and the terminal identification sound data from the storage section and transmits the speaking right acquisition status presentation sound and the terminal identification sound to the terminal devices.

Further, the electronic conference managing device according to the present invention further includes: a storage section for storing sound data, wherein: upon transmitting, to the terminal devices, the output command of instructing the output of the speaking right acquisition status presentation sound data and the terminal identification sound data, the speaking right status presentation control means reads out the speaking right acquisition status presentation sound data and the terminal identification sound data from the storage section and transmits the speaking right acquisition status presentation sound and the terminal identification sound to the terminal devices.

According to the above configurations, the sound data is stored in the storage section of the electronic conference managing device, and only required sound data is transmitted to the terminal devices together with the output command. As such, it is not necessary to transmit unnecessary sound data to the terminal devices, and to store the unnecessary sound data in the terminal devices.

The electronic conference system according to the present invention is configured such that: the electronic conference managing device further includes a storage section for storing sound data, upon notifying a status of the speaking right to the terminal devices, the speaking right status presentation control means reads out speaking right acquisition status presentation sound data and terminal identification sound data from the storage section and transmits the speaking right acquisition status presentation sound data and the terminal identification sound data to the terminal devices.

Further, the electronic conference managing device according to the present invention further includes: a storage section for storing sound data, upon notifying a status of the speaking right to the terminal devices, the speaking right status presentation control means reads out the speaking right acquisition status presentation sound data and terminal identification sound data from the storage section and transmits the speaking right acquisition status presentation sound data and the terminal identification sound data to the terminal devices.

According to the above configurations, the sound data is stored in the storage section of the electronic conference managing device, and only required sound data is transmitted to the terminal devices together with the notification indicating the status of the speaking right. Hence, it is not necessary to transmit unnecessary sound data to the terminal devices, and is not necessary to store the unnecessary sound data in the terminal devices.

Further, a terminal device, according to the present invention, constituting an electronic conference system including (i) a plurality of terminal devices that are able to communicate with one another and (ii) an electronic conference managing device for giving a speaking right to a terminal device includes speaking right status presenting means for outputting a speaking right acquisition status presentation sound indicating that none of the terminal devices has the speaking right, in cases where the terminal device has not made a speaking right obtaining request for a predetermined period of time since the terminal device released the speaking right or where the electronic conference managing device does not notify the terminal device that the speaking right has been given to none of the terminal devices.

According to the above configuration, in cases where each terminal device has not made a speaking right obtaining request for the predetermined period of time since the terminal device released the speaking right or where the electronic conference managing device does not notify the terminal device that the speaking right has been given to other terminal device, the terminal device judges that the speaking right is given to none of the terminal devices, and outputs the speaking right acquisition status presentation sound indicating that the speaking right is given to none of the terminal devices. Via the sound, each participant confirms that it is possible to make a request for the speaking right.

Further, a terminal device, according to the present invention, constituting an electronic conference system including (i) a plurality of terminal devices that are able to communicate with one another and (ii) an electronic conference managing device for giving a speaking right to a terminal device includes: speaking right status presenting means for starting outputting a speaking right acquisition status presentation sound indicating that none of the terminal devices has the speaking right, in cases where the terminal device has not made a speaking right obtaining request for a predetermined period of time since the terminal device received last communication from the other terminal devices or where the electronic conference managing device does not notify the terminal device that the speaking right has not been given to the other terminal devices.

According to the above configuration, in cases where each terminal device has not made a speaking right obtaining request for the predetermined period of time since the terminal device received last communication from the other terminal devices or where the electronic conference managing device does not notify the terminal device that the speaking right has not been given to the other terminal devices, the terminal device judges that the speaking right has been given to none of the terminal devices, and outputs the speaking right acquisition status presentation sound indicating that the speaking right has been given to none of the terminal devices. This allows the participant to confirm, via the sound, that it is possible to make a request for the speaking right.

Further, the terminal device according to the present invention further includes: voice recognizing means for recognizing a content of speech from speech data, wherein: the speaking right status presenting means selects, in accordance with the content recognized by the voice recognizing means, the speaking right acquisition status presentation to be outputted.

According to the above configuration, the terminal device is allowed to recognize the content of the speech from the speech data received from other terminal device, and selects speaking right acquisition status presentation sound data to be reproduced. With this, the terminal device can reproduce speaking right acquisition status presentation sound data relating to the topic of the speech, with the result that people who participate in the electronic conference halfway can understand the topic with ease.

A terminal device, according to the present invention, constituting an electronic conference system including (i) a plurality of terminal devices that are able to communicate with one another and (ii) an electronic conference managing device for giving a speaking right to a terminal device, includes: speaking right information acquiring means for receiving, from the electronic conference managing device, speaking right information indicating a terminal device having the speaking right; and speaking right status presenting means for reading out, from a storage section, terminal identification sound data correlated with the terminal device having the speaking right, and reproducing the terminal identification sound data thus read out.

According to the above configuration, the terminal device reads out, from the storage section, the terminal identification sound data correlated with the terminal device having the speaking right, and reproduces it. When the participant listens to the terminal identification sound data, the participant can confirm who has been given the speaking right. Further, only the speaking right information indicating a terminal device having the speaking right is transmitted from the electronic conference managing device, so that the configuration of the electronic conference managing device is simple.

Further, the electronic conference system according to the present invention may be configured such that when the speaking right is given to none of the terminal devices, the speaking right status presentation control means of the electronic conference managing device transmits, to the terminal devices, a reproduction command of instructing reproduction of the sound data indicating that the speaking right is given to none of the terminal devices.

Further, the electronic conference managing device according to the present invention may be configured such that when the speaking right is given to none of the terminal devices, the speaking right status presentation control means transmits, to the terminal devices, a reproduction command of instructing reproduction of sound data indicating that the speaking right is given to none of the terminal devices.

According to the above configuration, when the speaking right is given to none of the terminal devices during an electronic conference, the electronic conference managing device transmits, to each of the terminal devices, sound data indicating that the speaking right is given to none of the terminal devices. In cases where a speaking right obtaining request is received from any of the terminal devices, the electronic conference managing device transmits, to the other terminal devices, a command of instructing halt of reproduction of the sound data having been reproduced, or a command of instructing lowering of the volume of the reproduction of the sound data.

With this, when the speaking right is given to none of the terminal device, the terminal device of each participant can reproduce sound data indicating that the speaking right is given to none of the terminal devices. Further, when the speaking right is given to somebody, the reproduction of the sound data is halted, or the volume of the reproduction thereof is lowered. This makes it possible to confirm that the speaking right has been given to somebody, and speech therefrom can be heard without being interrupted by the sound. Note that in cases where the volume of the reproduction of the sound data is lowered, the sound data is reproduced in a BGM manner.

Further, the electronic conference system according to the present invention is configured such that the sound data that the speaking right status presentation control means of the electronic conference managing device instructs to be reproduced is commercial.

Further, the electronic conference managing device according to the present invention is configured such that the sound data that the speaking right status presentation control means of the electronic conference managing device instructs to be reproduced is commercial.

According to the above configuration, it is possible to reproduce sound data representing a CM relating to the topic of a speech. This makes it possible to present, to each participatant, the CM relating to the topic. This is highly effective in terms of advertisement.

Finally, the speaking right managing section 11, the speaking right status presentation control section 12, the speech detecting section 15, the voice recognizing section 16, and the presentation data creating section 17 of the PoC server 10, and the speaking right obtaining/ releasing section 61, the speaking right information acquiring section 62, and the speaking right status presenting section 63 of the mobile phone 40 may be constituted by hardware logic, or may be realized by software with the use of a CPU as follows.

That is, each of the PoC server 10 and the mobile phone 40 includes (i) a CPU (central processing unit) for executing instructions of a control program realizing each function; (ii) a ROM (read only memory) storing the above program; (iii) a RAM (random access memory) for expanding the program; (iv) a storage device (storage medium), such as a memory, storing the program and various types of data; and the like. Therefore, the object of the present invention is achieved by: (i) providing, in each of the PoC server 10 and the mobile phone 40, a storage medium which stores a computer-readable program code (executable program, intermediate code program, a source program) of the control program of each of the PoC server 10 and the mobile phone 40 that is software for realizing the function, and (ii) causing a computer (CPU, or MPU) to read out and execute the program code stored in the storage medium.

Examples of the storage medium are: tapes such as a magnetic tape and a cassette tape; magnetic disks such as a floppy® disk and a hard disk; disks such as a CD-ROM (compact disk read only memory), a magnetic optical disk (MO), a mini disk (MD), a digital video disk (DVD), and a CD-Recordable (CD-R); and the like. Further, the storage medium may be: a card such as an IC card or an optical card; or a semiconductor memory such as a mask ROM, an EPROM (electrically programmable read only memory), an EEPROM (electrically erasable programmable read only memory), or a flash ROM.

Further, each of the PoC server 10 and the mobile phone 40 may be so arranged as to be connectable to a communication network, and the program code may be supplied thereto via the communication network. The communication network is not particularly limited. Specific examples thereof are: the Internet, intranet, extranet, LAN (local area network), ISDN (integrated services digital network), VAN (value added network), CATV (cable TV) communication network, virtual private network, telephone network, mobile communication network, satellite communication network, and the like. Further, a transmission medium (channel) constituting the communication network is not particularly limited. Specific examples thereof are: (i) a wired channel using an IEEE1394, a USB (universal serial bus), a power-line communication, a cable TV line, a telephone line, a ADSL line, or the like; or (ii) a wireless channel using IrDA, infrared rays used for a remote controller, Bluetooth®, IEEE802.11, HDR (High Data Rate), a mobile phone network, a satellite connection, a terrestrial digital network, or the like. Note that the present invention can be realized by a form of a computer data signal (a series of data signals) embedded in a carrier wave realized by electronic transmission of the program code.

### INDUSTRIAL APPLICABILITY

According to an electronic conference system of the present invention, a terminal device outputs a sound according to a holder of a speaking right. The sound allows the user to recognize the holder of the speaking right, even when he/she puts the terminal device on the ear. As such, the present invention is suitably applicable to, e.g., a multi-location electronic conference system adopting a PoC communication system using mobile phones and a mobile phone network.

Further, the terminal device of the present invention has a communication function, and is applicable to (i) mobile terminal devices such as a mobile phone, a beeper, and a PDA (Personal Digital Assistant), (ii) various information processing devices such as a personal computer and a laptop personal computer, or (iii) various audio/visual devices such as a television broadcasting receiver and a music reproducing device.

## Claims

1. An electronic conference system (100), comprising a plurality of terminal devices (40) that are able to communicate with one another, and an electronic conference managing device (10) for giving a speaking right to a terminal device (40),
each of the terminal devices (40) including a wireless communication section, a sound input section, a sound output section, and speaking right obtaining/releasing means (61) for transmitting either a speaking right obtaining request or a speaking right releasing request,
the electronic conference managing device (10) including speaking right status presentation control means (12) for (i) notifying, under a condition that the speaking right is given to none of the terminal devices (40), an output command or the condition to each of the terminal devices (40) so as to cause the sound output section of each of the terminal devices (40) to output a speaking right acquisition status presentation sound indicating the condition, and (ii) transmitting, when the speaking right is given to any of the terminal devices (40), to the terminal devices (40) except the terminal device (40) which is given the speaking right, a command of instructing halt of the output of the speaking right acquisition status presenting sound.

2. The electronic conference system (100) as set forth in claim 1, wherein:
the speaking right status presentation control means (12) transmits the speaking right acquisition status presentation sound to each of the terminal devices (40) together with the output command; and
when the speaking right is given to any of the terminal devices, the speaking right status presentation control means (12) halts the transmission of the speaking right acquisition status presentation sound.

3. The electronic conference system (100) as set forth in claim 2, wherein:
each of the terminal devices (40) includes speaking right status presenting means for reading out the speaking right acquisition status presentation sound data from a storage section and reproducing the speaking right acquisition status presentation sound data thus read out.

4. The electronic conference (100) system as set forth in claim 2, wherein:
each of the terminal devices (40) outputs the speaking right acquisition status presentation sound after passage of a certain period of time during which the speaking right is given to none of the terminal devices (40).

5. The electronic conference system (100) as set forth in claim 1, wherein:
the electronic conference managing device further includes voice recognizing means for recognizing a content of speech from speech data sent from the terminal device (40) having the speaking right, and
the speaking right status presentation control means selects, in accordance with the content recognized by the voice recognizing means, the speaking right acquisition status presentation sound that the terminal devices (40) are to be instructed to output.

6. An electronic conference managing device, which gives a speaking right to any of a plurality of terminal devices (40) that are able to communicate with one another,
each of the terminal devices (40) including a wireless communication section, a sound input section, a sound output section, and speaking right obtaining/releasing means (61) for transmitting either a speaking right obtaining request or a speaking right releasing request,
said electronic conference managing device, comprising:
speaking right status presentation control means (12) for (i) notifying, under a condition that the speaking right is given to none of the terminal devices (40), an output command or the condition to each of the terminal devices (40) so as to cause the sound output section of each of the terminal devices (40) to output a speaking right acquisition status presentation sound indicating the condition, and (11) transmitting, when the speaking right is given to any of the terminal devices (40), to the terminal devices (40) except the terminal device (40) which is given the speaking right, a command of instructing halt of the output of the speaking right acquisition status presenting sound.

7. The electronic conference managing device as set forth in claim 6, further comprising:
voice recognizing means for recognizing a content of speech from speech data sent from the terminal device (40) having the speaking right, and
the speaking right status presentation control means (12) selects, in accordance with the content recognized by the voice recognizing means, the speaking right acquisition status presentation sound that the terminal devices (40) are to be instructed to output.

8. The electronic conference system (100) as set forth in any one of claims 1 to 5, wherein:
the electronic conference managing device (10) further includes a storage section for storing sound data,
upon transmitting to the terminal devices (40) an output command of instructing output of speaking right acquisition status presentation sound data, the speaking right status presentation control means (12) reads out the speaking right acquisition status presentation sound data from the storage section and transmits the speaking right acquisition status presentation sound data to the terminal devices (40); and when the speaking right is given to any of the terminal devices (40), the speaking right status presentation control means (12) halts the transmission of the speaking right acquisition status presentation sound data.

9. The electronic conference system (100) as set forth in any one of claims 1 to 5, wherein:
the electronic conference managing device (10) further includes a storage section for storing sound data,
upon notifying a status of the speaking right to the terminal devices (40), the speaking right status presentation control means (12) reads out speaking right acquisition status presentation sound data from the storage section and transmits the speaking right acquisition status presentation sound data to the terminal devices (40); and when the speaking right is given to any of the terminal devices (40), the speaking right status presentation control means (12) halts the transmission of the speaking right acquisition status presentation sound data.

10. The electronic conference managing device as set forth in claim 6 or 7, further comprising:
a storage section for storing sound data, wherein:
upon transmitting, to the terminal devices (40), the output command of instructing the output of the speaking right acquisition status presentation sound data, the speaking right status presentation control (12) means reads out the speaking right acquisition status presentation sound data from the storage section and transmits the speaking right acquisition status presentation sound data to the terminal devices (40); and when the speaking right is given to any of the terminal devices (40), the speaking right status presentation control means (12) halts the transmission of the speaking right acquisition status presentation sound data.

11. The electronic conference managing device as set forth in claim 6 or 7, further comprising:
a storage section for storing sound data, wherein:
upon notifying a status of the speaking right to the terminal devices (40), the speaking right status presentation control means reads out the speaking right acquisition status presentation sound data from the storage section and transmits the speaking right acquisition status presentation sound data to the terminal devices (40); and when the speaking right is given to any of the terminal devices (40), the speaking right status presentation control means (12) halts the transmission of the speaking right acquisition status presentation sound data.

12. A terminal device constituting an electronic conference system including (i) a plurality of terminal devices (40) that are able to communicate with one another and (ii) an electronic conference managing device (10) for giving a speaking right to a terminal device,
each of the terminal devices (40) including a wireless communication section, a sound input section, a sound output section, and speaking right obtaining/releasing means (61) for transmitting either a speaking right obtaining request or a speaking right releasing request,
said terminal device (40), comprising:
speaking right status presenting means for causing the sound output section to output, until said terminal device (40) makes a speaking right obtaining request or until said terminal device (40) receives a command of instructing halt of output of the speaking right acquisition status presenting sound, a speaking right acquisition status presentation sound indicating that none of the terminal devices (40) has the speaking right, in cases where said terminal device (40) has not made a speaking right obtaining request for a predetermined period of time since said terminal device (40) released the speaking right or where the electronic conference managing device does not notify said terminal device (40) that the speaking right has been given to any of the terminal devices (40) other than said terminal device (40).

13. The terminal device as set forth in claim 12, further comprising:
voice recognizing means for recognizing a content of speech from speech data, wherein:
the speaking right status presenting means selects, in accordance with the content recognized by the voice recognizing means, the speaking right acquisition status presentation sound to be outputted.

14. An electronic conference managing method, utilized in an electronic conference system (100) including (i) a plurality of terminal devices (40) that are able to communicate with one another and (ii) an electronic conference managing device (10) for giving a speaking right to a terminal device (40),
each of the terminal devices (40) including a wireless communication section, a sound input section, a sound output section, and speaking right obtaining/releasing means (61) for transmitting either a speaking right obtaining request or a speaking right releasing request,
the electronic conference managing device (10) including speaking right status presentation control means for (i) notifying, under a condition that the speaking right is given to none of the terminal devices, an output command or the condition to each of the terminal devices (40) so as to cause the sound output section of each of the terminal devices (40) to output a speaking right acquisition status presentation sound indicating the condition, and (ii) transmitting, when the speaking right is given to any of the terminal devices (40), to the terminal devices (40) except the terminal device (40) which is given the speaking right, a command of instructing halt of the output of the speaking right acquisition status presenting sound.

15. A control program for causing the electronic conference managing device as set forth in any one of claims 6, 7, 10, and 11 to operate, said control program causing a computer to function as the respective means.

16. A control program for causing the terminal device as set forth in claim 12 to operate, said control program causing a computer to function as the respective means.

17. A computer-readable storage medium storing the control program as set forth in claim 15 or 16.

## Patentansprüche

1. Elektronisches Konferenzsystem (100), das mehrere Endgeräte (40) enthält, die miteinander kommunizieren können, und ein elektronisches Konferenzmanagementgerät (10) zum Erteilen eines Rederechts an ein Endgerät (40),
wobei jedes der Endgeräte (40) einen drahtlosen Kommunikationsabschnitt, einen Toneingabeabschnitt, einen Tonausgabeabschnitt und Mittel (61) zum Erhalten/Freigeben des Rederechts, um entweder eine Anforderung zum Erhalten des Rederechts oder eine Anforderung zum Freigeben des Rederechts zu senden, enthält,
wobei das elektronische Konferenzmanagementgerät (10) Steuermittel (12) zur Anzeige des Rederechtstatus enthält, um (i) unter der Bedingung, dass das Rederecht an keines der Endgeräte (40) erteilt ist, einen Ausgabebefehl oder die Bedingung an jedes der Endgeräte zu melden, um zu bewirken, dass der Tonausgabeabschnitt jedes Endgeräts (40) einen Rederechtübernahmestatusanzeigeton ausgibt, der die Bedingung anzeigt, und (ii) wenn das Rederecht an eines der Endgeräte (40) erteilt ist, an die Endgeräte (40) mit Ausnahme des Endgerätes (40), an das das Rederecht erteilt ist, einen Befehl zu senden, der das Anhalten der Ausgabe des Rederechtübernahmestatusanzeigetons anweist.

2. Elektronisches Konferenzsystem (100) nach Anspruch 1, wobei:
die Steuermittel (12) zur Anzeige des Rederechtstatus den Rederechtübernahmestatusanzeigeton zu jedem Endgerät (40) zusammen mit dem Ausgabebefehl senden; und
wenn das Rederecht an eines der Endgeräte erteilt ist, die Steuermittel (12) zur Anzeige des Rederechtstatus das Senden des Rederechtübernahmestatusanzeigetons anhalten.

3. Elektronisches Konferenzsystem (100) nach Anspruch 2, wobei:
jedes der Endgeräte (40) Rederechtstatusanzeigemittel enthält, um die Rederechtübernahmestatusanzeigeton-Daten aus einem Speicherbereich auszulesen und die auf diese Weise ausgelesenen Rederechtübernahmestatusanzeigeton-Daten wiederzugeben.

4. Elektronisches Konferenzsystem (100) nach Anspruch 2, wobei:
jedes der Endgeräte (40) den Rederechtübernahmestatusanzeigeton nach Ablauf einer bestimmten Zeitspanne, während der das Rederecht an keines der Engeräte (40) erteilt ist, ausgibt.

5. Elektronisches Konferenzsystem (100) nach Anspruch 1, wobei:
das elektronische Konferenzmanagementgerät ferner Spracherkennungsmittel enthält, um einen Sprachinhalt aus Sprachdaten zu erkennen, die von dem Endgerät (40) gesendet werden, das das Rederecht hat, und
die Steuermittel (12) zur Anzeige des Rederechtstatus entsprechend dem Inhalt, der von den Spracherkennungsmitteln erkannt wird, den Rederechtübernahmestatusanzeigeton auswählen, den auszugeben die Endgeräte (40) angewiesen werden sollen.

6. Elektronisches Konferenzmanagementgerät, das ein Rederecht an jedes beliebige von mehreren Endgeräten (40) erteilt, die miteinander kommunizieren können,
wobei jedes der Endgeräte (40) einen drahtlosen Kommunikationsabschnitt, einen Toneingabeabschnitt, einen Tonausgabeabschnitt und Mittel (61) zum Erhalten/Freigeben des Rederechts, um entweder eine Anforderung zum Erhalten des Rederechts oder eine Anforderung zum Freigeben des Rederechts zu senden, enthält,
wobei das elektronische Konferenzmanagementgerät enthält:
Steuermittel (12) zur Anzeige des Rederechtstatus, um (i) unter der Bedingung, dass das Rederecht an keines der Endgeräte (40) erteilt ist, einen Ausgabebefehl oder die Bedingung an jedes der Endgeräte zu melden, um zu bewirken, dass der Tonausgabeabschnitt jedes Endgeräts (40) einen Rederechtübernahmestatusanzeigeton ausgibt, der die Bedingung anzeigt, und um dann, (ii) wenn das Rederecht an eines der Endgeräte (40) erteilt ist, an die Endgeräte (40) mit Ausnahme des Endgerätes (40), an das das Rederecht erteilt ist, einen Befehl zu senden, der das Anhalten der Ausgabe des Rederechtübernahmestatusanzeigeton anweist.

7. Elektronisches Konferenzmanagementgerät nach Anspruch 6, das ferner enthält:
Spracherkennungsmittel, um einen Sprachinhalt aus Sprachdaten zu erkennen, die vom Endgerät (40) gesendet werden, welches das Rederecht hat, und
die Steuermittel (12) zur Anzeige des Rederechtstatus entsprechend dem Inhalt, der von den Spracherkennungsmitteln erkannt wird, den Rederechtübernahmestatusanzeigeton auswählen, den auszugeben die Endgeräte (40) angewiesen werden sollen.

8. Elektronisches Konferenzsystem (100) nach einem der Ansprüche 1 bis 5, wobei:
das elektronische Konferenzmanagementgerät (10) ferner einen Speicherbereich zum Speichern der Tondaten enthält,
nach dem Senden eines Ausgabebefehls an die Engeräte (40), der die Ausgabe der Rederechtübernahmestatusanzeigeton-Daten anweist, die Steuermittel (12) zur Anzeige des Rederechtstatus die Rederechtübernahmestatusanzeigeton-Daten aus dem Speicherbereich auslesen und die Rederechtübernahmestatusanzeigeton-Daten zu den Endgeräten (40) senden; und wenn das Rederecht an eines der Endgeräte (40) erteilt ist, die Steuermittel (12) zur Anzeige des Rederechtstatus das Senden der Rederechtübernahmestatusanzeigeton-Daten anhalten.

9. Elektronisches Konferenzsystem (100) nach einem der Ansprüche 1 bis 5, wobei:
das elektronische Konferenzmanagementgerät (10) ferner einen Speicherbereich zum Speichern der Tondaten enthält,
nach dem Melden eines Rederechtstatus an die Endgeräte (40) die Steuermittel (12) zur Anzeige des Rederechtstatus die Rederechtübernahmestatusanzeigeton-Daten aus dem Speicherbereich auslesen und die Rederechtübernahmestatusanzeigeton-Daten zu den Endgeräten (40) senden; und wenn das Rederecht an eines der Endgeräte (40) erteilt ist, die Steuermittel (12) zur Anzeige des Rederechtstatus das Senden der Rederechtübernahmestatusanzeigeton-Daten anhalten.

10. Elektronisches Konferenzmanagementgerät nach einem der Ansprüche 6 oder 7, das ferner enthält:
einen Speicherbereich zum Speichern von Tondaten, wobei:
nach dem Senden eines Ausgabebefehls an die Engeräte (40), der die Ausgabe der Rederechtübernahmestatusanzeigeton-Daten anweist, die Steuermittel (12) zur Anzeige des Rederechtstatus die Rederechtübernahmestatusanzeigeton-Daten aus dem Speicherbereich auslesen und die Rederechtübernahmestatusanzeigeton-Daten zu den Endgeräten (40) senden; und wenn das Rederecht an eines der Endgeräte (40) erteilt ist, die Steuermittel (12) zur Anzeige des Rederechtstatus das Senden der Rederechtübernahmestatusanzeigeton-Daten anhalten.

11. Elektronisches Konferenzmanagementgerät nach einem der Ansprüche 6 oder 7, das ferner enthält:
einen Speicherbereich zum Speichern von Tondaten, wobei:
nach dem Melden eines Rederechtstatus an die Endgeräte (40) die Steuermittel zur Anzeige des Rederechtstatus die Rederechtübernahmestatusanzeigeton-Daten aus dem Speicherbereich auslesen und die Rederechtübernahmestatusanzeigeton-Daten zu den Endgeräten (40) senden; und wenn das Rederecht an eines der Endgeräte (40) erteilt ist, die Steuermittel (12) zur Anzeige des Rederechtstatus das Senden der Rederechtübernahmestatusanzeigeton-Daten anhalten.

12. Endgerät, das ein elektronisches Konferenzsystem konstituiert, das (i) mehrere Endgeräte (40), die miteinander kommunizieren können, und (ii) ein elektronisches Konferenzmanagementgerät (10) zum Erteilen eines Rederechts an ein Endgerät enthält,
wobei jedes der Endgeräte (40) einen drahtlosen Kommunikationsabschnitt, einen Toneingabeabschnitt, einen Tonausgabeabschnitt und Mittel (61) zum Erhalten/Freigeben des Rederechts, um entweder eine Anforderung zum Erhalten des Rederechts oder eine Anforderung zum Freigeben des Rederechts zu senden, enthält,
wobei das Endgerät (40) enthält:
Rederechtstatusanzeigemittel, um zu bewirken, dass der Tonausgabeabschnitt so lange, bis das Endgerät (40) eine Anforderung zum Erhalten des Rederechts stellt oder bis das Endgerät (40) einen Befehl zum Anhalten der Ausgabe des Rederechtübernahmestatusanzeigetons erhält, einen Rederechtübernahmestatusanzeigeton ausgibt, der anzeigt, dass keines der Endgeräte (40) das Rederecht besitzt, in Fällen, wenn das Endgerät (40) für einen vorgegebenen Zeitraum keine Anforderung zum Erhalten des Rederechts gestellt hat, seit das Endgerät (40) das Rederecht freigegeben hat, oder wo das elektronische Konferenzmanagementgerät dem Endgerät (40) nicht meldet, dass das Rederecht an eines der Endgeräte (40) erteilt wurde, das ein anderes als dieses Endgerät (40) ist.

13. Endgerät nach Anspruch 12, das ferner enthält:
Spracherkennungsmittel, um einen Sprachinhalt aus Sprachdaten zu erkennen, wobei:
Rederechtstatusanzeigemittel entsprechend dem Inhalt, der von den Spracherkennungsmitteln erkannt wird, den Rederechtübernahmestatusanzeigeton auswählen, der ausgegeben werden soll.

14. Elektronisches Konferenzmanagementverfahren, das in einem elektronischen Konferenzsystem (100) verwendet wird, das (i) mehrere Endgeräte (40), die miteinander kommunizieren können, und (ii) ein elektronisches Konferenzmanagementgerät zum Erteilen eines Rederechts an ein Endgerät (40) enthält,
wobei jedes der Endgeräte (40) einen drahtlosen Kommunikationsabschnitt, einen Toneingabeabschnitt, einen Tonausgabeabschnitt und Mittel (61) zum Erhalten/Freigeben des Rederechts, um entweder eine Anforderung zum Erhalten des Rederechts oder eine Anforderung zum Freigeben des Rederechts zu senden, enthält,
wobei das elektronische Konferenzmanagementgerät (10) Steuermittel (12) zur Anzeige des Rederechtstatus enthält, um (i) unter der Bedingung, dass das Rederecht an keines der Endgeräte erteilt ist, einen Ausgabebefehl oder die Bedingung an jedes der Endgeräte zu melden, um zu bewirken, dass der Tonausgabeabschnitt jedes Endgeräts (40) einen Rederechtübernahmestatusanzeigeton ausgibt, der die Bedingung anzeigt, und (ii) wenn das Rederecht an eines der Endgeräte (40) erteilt ist, an die Endgeräte (40) mit Ausnahme des Endgerätes (40), an das das Rederecht erteilt ist, einen Befehl zu senden, der das Anhalten der Ausgabe des Rederechtübernahmestatusanzeigeton anweist.

15. Steuerprogramm zum Bewirken, dass das elektronische Konferenzmanagementgerät nach einem der Ansprüche 6, 7, 10 und 11 arbeitet, wobei das Steuerprogramm bewirkt, dass ein Computer als die entsprechenden Mittel arbeitet.

16. Steuerprogramm zum Bewirken, dass das Endgerät nach Anspruch 12 arbeitet, wobei das Steuerprogramm bewirkt, dass ein Computer als die entsprechenden Mittel arbeitet.

17. Computerlesbares Speichermedium, das das Steuerprogramm nach Anspruch 15 oder 16 speichert.

## Revendications

1. Système de conférence électronique (100) qui comprend une pluralité de terminaux (40) aptes à communiquer entre eux, et un dispositif de gestion de conférence électronique (10) permettant de conférer un droit de conversation à un terminal (40) ;
chacun des terminaux (40) comprend une section de communication sans fil, une section d'entrée de son, une section de sortie de son, et un moyen de libération/d'obtention de droit de conversation (61) en vue de transmettre une demande d'obtention de droit de conversation ou une demande de libération de droit de conversation ;
le dispositif de gestion de conférence électronique (10) comprend un moyen de commande de présentation d'état de droit de conversation (12) pour (i) signaler, à condition que le droit de conversation n'ait été conféré à aucun des terminaux (40), une commande de sortie ou l'état à chacun des terminaux (40), de façon à amener la section de sortie de son de chacun des terminaux (40) à générer en sortie un son de présentation d'état d'acquisition de droit de conversation indiquant l'état, et pour (ii) transmettre, lorsque le droit de conversation est conféré à l'un quelconque des terminaux (40), aux terminaux (40) à l'exception du terminal (40) auquel a été conféré le droit de conversation, une commande d'instruction d'arrêt de la sortie du son de présentation d'état d'acquisition de droit de conversation.

2. Système de conférence électronique (100) selon la revendication 1, dans lequel :
le moyen de commande de présentation d'état de droit de conversation (12) transmet le son de présentation d'état d'acquisition de droit de conversation à chacun des terminaux (40) à l'aide de la commande de sortie ; et
lorsque le droit de conversation est conféré à l'un quelconque des terminaux, le moyen de commande de présentation d'état de droit de conversation (12) met fin à la transmission du son de présentation d'état d'acquisition de droit de conversation.

3. Système de conférence électronique (100) selon la revendication 2, dans lequel :
chacun des terminaux (40) comprend un moyen de présentation d'état de droit de conversation pour lire les données sonores de présentation d'état d'acquisition de droit de conversation à partir d'une section de stockage, et reproduire les données sonores de présentation d'état d'acquisition de droit de conversation ainsi lues.

4. Système de conférence électronique (100) selon la revendication 2, dans lequel :
chacun des terminaux (40) génère en sortie le son de présentation d'état d'acquisition de droit de conversation à l'expiration d'une certaine période de temps au cours de laquelle le droit de conversation n'est conféré à aucun des terminaux (40).

5. Système de conférence électronique (100) selon la revendication 1, dans lequel :
le dispositif de gestion de conférence électronique comprend en outre un moyen de reconnaissance vocale pour reconnaître un contenu vocal provenant de données vocales envoyées à partir du terminal (40) présentant le droit de conversation ; et
le moyen de commande de présentation d'état de droit de conversation sélectionne, en fonction du contenu reconnu par le moyen de reconnaissance vocale, le son de présentation d'état d'acquisition de droit de conversation que les terminaux (40) vont devoir générer en sortie.

6. Dispositif de gestion de conférence électronique, lequel confère un droit de conversation à l'un quelconque d'une pluralité de terminaux (40) aptes à communiquer entre eux ;
chacun des terminaux (40) comprend une section de communication sans fil, une section d'entrée de son, une section de sortie de son, et un moyen de libération/d'obtention de droit de conversation (61) en vue de transmettre une demande d'obtention de droit de conversation ou une demande de libération de droit de conversation,
ledit dispositif de gestion de conférence électronique comprenant :
un moyen de commande de présentation d'état de droit de conversation (12) pour (i) signaler, à condition que le droit de conversation n'ait été conféré à aucun des terminaux (40), une commande de sortie ou l'état à chacun des terminaux (40), de façon à amener la section de sortie de son de chacun des terminaux (40) à générer en sortie un son de présentation d'état d'acquisition de droit de conversation indiquant l'état, et pour (ii) transmettre, lorsque le droit de conversation est conféré à l'un quelconque des terminaux (40), aux terminaux (40) à l'exception du terminal (40) auquel a été conféré le droit de conversation, une commande d'instruction d'arrêt de la sortie du son de présentation d'état d'acquisition de droit de conversation.

7. Dispositif de gestion de conférence électronique selon la revendication 6, comprenant en outre :
un moyen de reconnaissance vocale pour reconnaître un contenu vocal provenant de données vocales envoyées à partir du terminal (40) présentant le droit de conversation ; et
le moyen de commande de présentation d'état de droit de conversation (12) sélectionne, en fonction du contenu reconnu par le moyen de reconnaissance vocale, le son de présentation d'état d'acquisition de droit de conversation que les terminaux (40) vont devoir générer en sortie.

8. Système de conférence électronique (100) selon l'une quelconque des revendications 1 à 5, dans lequel :
le dispositif de gestion de conférence électronique (10) comprend en outre une section de stockage pour stocker des données sonores ;
lors de la transmission aux terminaux (40) d'une commande de sortie destinée à demander la génération en sortie de données sonores de présentation d'état d'acquisition de droit de conversation, le moyen de commande de présentation d'état de droit de conversation (12) lit les données sonores de présentation d'état d'acquisition de droit de conversation à partir de la section de stockage, et transmet les données sonores de présentation d'état d'acquisition de droit de conversation aux terminaux (40) ; et lorsque le droit de conversation est conféré à l'un quelconque des terminaux (40), le moyen de commande de présentation d'état de droit de conversation (12) met fin à la transmission des données sonores de présentation d'état d'acquisition de droit de conversation.

9. Système de conférence électronique (100) selon l'une quelconque des revendications 1 à 5, dans lequel :
le dispositif de gestion de conférence électronique (10) comprend en outre une section de stockage pour stocker des données sonores ;
suite à la notification d'un état du droit de conversation aux terminaux (40), le moyen de commande de présentation d'état de droit de conversation (12) lit des données sonores de présentation d'état d'acquisition de droit de conversation à partir de la section de stockage, et transmet les données sonores de présentation d'état d'acquisition de droit de conversation aux terminaux (40) ; et lorsque le droit de conversation est conféré à l'un quelconque des terminaux (40), le moyen de commande de présentation d'état de droit de conversation (12) met fin à la transmission des données sonores de présentation d'état d'acquisition de droit de conversation.

10. Dispositif de gestion de conférence électronique selon la revendication 6 ou 7, comprenant en outre :
une section de stockage pour stocker des données sonores, dans lequel :
lors de la transmission aux terminaux (40) de la commande de sortie demandant la génération en sortie des données sonores de présentation d'état d'acquisition de droit de conversation, le moyen de commande de présentation d'état de droit de conversation (12) lit les données sonores de présentation d'état d'acquisition de droit de conversation à partir de la section de stockage, et transmet les données sonores de présentation d'état d'acquisition de droit de conversation aux terminaux (40) ; et lorsque le droit de conversation est conféré à l'un quelconque des terminaux (40), le moyen de commande de présentation d'état de droit de conversation (12) met fin à la transmission des données sonores de présentation d'état d'acquisition de droit de conversation.

11. Dispositif de gestion de conférence électronique selon la revendication 6 ou 7, comprenant en outre :
une section de stockage pour stocker des données sonores, dans lequel :
suite à la notification d'un état du droit de conversation aux terminaux (40), le moyen de commande de présentation d'état de droit de conversation lit les données sonores de présentation d'état d'acquisition de droit de conversation à partir de la section de stockage, et transmet les données sonores de présentation d'état d'acquisition de droit de conversation aux terminaux (40) ; et lorsque le droit de conversation est conféré à l'un quelconque des terminaux (40), le moyen de commande de présentation d'état de droit de conversation (12) met fin à la transmission des données sonores de présentation d'état d'acquisition de droit de conversation.

12. Dispositif terminal constituant un système de conférence électronique comprenant (i) une pluralité de terminaux (40) aptes à communiquer entre eux, et (ii) un dispositif de gestion de conférence électronique (10) permettant de conférer un droit de conversation à un terminal ;
chacun des terminaux (40) comprend une section de communication sans fil, une section d'entrée de son, une section de sortie de son, et un moyen de libération/d'obtention de droit de conversation (61) en vue de transmettre une demande d'obtention de droit de conversation ou une demande de libération de droit de conversation ;
ledit terminal (40) comprenant :
un moyen de présentation d'état de droit de conversation pour amener la section de sortie de son à générer en sortie, jusqu'à ce que ledit terminal (40) émette une demande d'obtention de droit de conversation ou jusqu'à ce que ledit terminal (40) reçoive une commande d'instruction d'arrêt de la génération en sortie du son de présentation d'état d'acquisition de droit de conversation, un son de présentation d'état d'acquisition de droit de conversation indiquant qu'aucun des terminaux (40) ne présente le droit de conversation, dans les cas où ledit terminal (40) n'a pas émis de demande d'obtention de droit de conversation au cours d'une période de temps prédéterminée depuis que ledit terminal (40) a libéré le droit de conversation, ou dans les cas où le dispositif de gestion de conférence électronique ne signale pas audit terminal (40) que le droit de conversation a été conféré à l'un quelconque des terminaux (40) distinct dudit terminal (40).

13. Dispositif terminal selon la revendication 12, comprenant en outre :
un moyen de reconnaissance vocale pour reconnaître un contenu vocal provenant de données vocales, dans lequel :
le moyen de présentation d'état de droit de conversation sélectionne, en fonction du contenu reconnu par le moyen de reconnaissance vocale, le son de présentation d'état d'acquisition de droit de conversation destiné à être généré en sortie.

14. Procédé de gestion de conférence électronique, utilisé dans un système de conférence électronique (100) comprenant (i) une pluralité de terminaux (40) aptes à communiquer entre eux, et (ii) un dispositif de gestion de conférence électronique (10) permettant de conférer un droit de conversation à un terminal (40) ;
chacun des terminaux (40) comprend une section de communication sans fil, une section d'entrée de son, une section de sortie de son, et un moyen de libération/d'obtention de droit de conversation (61) en vue de transmettre une demande d'obtention de droit de conversation ou une demande de libération de droit de conversation ;
le dispositif de gestion de conférence électronique (10) comprend un moyen de commande de présentation d'état de droit de conversation pour (i) signaler, à condition que le droit de conversation n'ait été conféré à aucun des terminaux, une commande de sortie ou l'état à chacun des terminaux (40), de façon à amener la section de sortie de son de chacun des terminaux (40) à générer en sortie un son de présentation d'état d'acquisition de droit de conversation indiquant l'état, et pour (ii) transmettre, lorsque le droit de conversation est conféré à l'un quelconque des terminaux (40), aux terminaux (40) à l'exception du terminal (40) auquel a été conféré le droit de conversation, une commande d'instruction d'arrêt de la génération en sortie du son de présentation d'état d'acquisition de droit de conversation.

15. Programme de commande destiné à amener le dispositif de gestion de conférence électronique selon l'une quelconque des revendications 6, 7, 10, et 11 à être exploité, ledit programme de commande amenant un ordinateur à fonctionner en tant que moyens respectifs.

16. Programme de commande destiné à amener le dispositif terminal selon la revendication 12 à être exploité, ledit programme de commande amenant un ordinateur à fonctionner en tant que moyens respectifs.

17. Support de stockage lisible par un ordinateur, stockant le programme de commande selon la revendication 15 ou 16.
